# EUROPÄISCHE PATENTSCHRIFT

(11) **EP 0 697 629 B1**
(45) Veröffentlichungstag und Bekanntmachung des Hinweises auf die Patenterteilung: **07.02.2001**
(21) Anmeldenummer: 95810501.7
(22) Anmeldetag: 08.08.1995
(51) Int. Cl.: G03D 15/00, G03B 27/73

(54) **Verfahren und Vorrichtung zur Erzeugung von Index-Prints auf bzw. mit einem photographischen Printer**
Method and device to create index prints with a photographic printing device
Procédé et dispositif pour créer des images composés avec une imprimante photographique

(30) Priorität: 16.08.1994 EP 94810471; 15.11.1994 CH 342594
(43) Veröffentlichungstag der Anmeldung: 21.02.1996
(73) Patentinhaber: GRETAG IMAGING AG, 8105 Regensdorf (CH)
(72) Erfinder: Frick, Beat, Dr., CH-8107 Buchs (CH); Wahli, Robert, CH-8832 Wollerau (CH); Nussbaumer, Max, CH-5454 Bellikon (NL)
(74) Vertreter: Schwabe - Sandmair - Marx

(56) Entgegenhaltungen:
- US-A- 4 805 039
- US-A- 4 903 068
- US-A- 5 051 773
- US-A- 5 184 227

## Beschreibung

Die Erfindung betrifft ein Verfahren und eine Vorrichtung zur Erzeugung von Index-Prints auf bzw. mit einem photographischen Printer gemäss den Oberbegriffen der unabhängigen Ansprüche 1 und 29.

Die vorliegende Erfindung befasst sich mit photographischen Printern im allgemeinen und mit der Vorgehensweise und der Gerätegestaltung im besonderen, um auf solchen Printern zusätzlich zur normalen Aufgabe des Vergrösserns photographischer Bildvorlagen Index-Prints erzeugen zu können.

Definitionsgemäss ist ein Index-Print eine einzelne Papierkopie mit einer Matrix von kleinen Bildern, die separaten Negativen auf einem photographischen Filmstreifen entsprechen. Index-Prints erfüllen für den Photoamateur ein praktisches Bedürfnis, erlauben sie doch, vom bildmässigen Inhalt eines Filmstreifens über die Zwischenstufe eines positiven Aufsichtsbildes Kenntnis zu nehmen, ohne dass der Film selbst betrachtet und berührt werden müsste. Dies stellt eine grosse Erleichterung insbesondere im Zusammenhang mit Negativfilmen dar, ist es doch für den ungeübten Benutzer wegen der Farbumkehr und der Filmmaske schwierig, den Bildinhalt von Farbnegativen zu beurteilen.

Index-Prints sind in jüngerer Zeit durch die Popularisierung der Videotechnologie in Form von Photo-CDs bekannt geworden. Sie stellen in dieser Anwendung ein eigentliches Inhaltsverzeichnis der Bilder dar, die auf der Photo-CD enthalten sind. Dabei ist jedem Bild insbesondere auch seine Adresse auf der CD zugeordnet, so dass das Bild direkt zur Präsentation auf einem Monitor aufgerufen werden kann. Beachtenswert in diesem Zusammenhang ist, dass der Index-Print zur ursprünglichen Bildvorlage (Negativ-Filmstreifen, Diapositiv etc.) keine direkte Beziehung mehr aufweist.

Photographische Kopieranstalten arbeiten üblicherweise nicht mit Index-Prints, wenngleich die Technologie dafür an sich vorhanden wäre. Möglicherweise ist das Bedürfnis für Index-Prints hier nicht so ausgeprägt, weil die Qualität der Kameras, des photographischen Materials und der Verarbeitungsgeräte im Photolabor einen Stand erreicht hat, der einen sehr hohen Prozentsatz guter Bilder bereits im Erstdurchgang gewährleistet. Für Nachbestellungen sind zudem besondere Hilfen erarbeitet worden, die eine zweifelsfreie Identifikation jener Negative erlauben, von denen weitere Kopien gewünscht werden.

Einzelne Verarbeitungslabors offerieren allerdings sogenannte Streifenkopien, auch als Archivkopien oder Proof Prints bezeichnet. Dies sind leicht vergrösserte (zum Beispiel 150%) Aufsichtsbilder von den auf einem Filmstreifen enthaltenen Vorlagenegativen. Sie werden auf speziellen oder für den Zweck umstellbaren Produktionsprintern erzeugt, wobei meist auch die zugehörige Negativnummer mitkopiert wird. Wie der Name andeutet, sind Streifenkopien Bilder auf einem schmalen Papierband, das nach jeweils einer vorgegebenen Anzahl Bilder in Streifen geschnitten wird. Es handelt sich in diesem Fall also nicht eigentlich um einen Index-Print in Matrix-Darstellung. Gleiches gilt für die sogenannten Blattkopien. Hier wird der entwickelte Film in Streifen geschnitten, von denen jeder eine Anzahl Negative enthält. Mehrere solcher Streifen werden sodann nebeneinander auf ein Blatt unbelichteten Photopapiers gelegt und im Kontaktverfahren kopiert. Zwar liegt in diesem Fall eine matrix-ähnliche Struktur vor, doch weicht das Papierformat (z.B. A4) so stark von jenem der normalen Einzelbild-Vergrösserungen ab, dass für die Blattkopie spezielle Gerätschaften erforderlich sind und Produktionsprinter nicht mehr eingesetzt werden können. Der Kunde erhält in beiden Fällen die Möglichkeit, nur von jenen Negativen Vergrösserungen zu bestellen, die er als besonders gut gelungen oder wertvoll betrachtet. Der zusätzliche Aufwand für dieses zweistufige Verfahren und die ihm inhärente Tendenz zur Reduktion der Auftragsgrösse lassen es verständlich erscheinen, weshalb Index-Prints von den Labors kaum gefördert werden.

Als Technologie zur Erzeugung von Index-Prints stehen im Prinzip zwei Verfahren zur Verfügung. Beim ersten werden die Bildfelder auf dem Negativfilm durch optische Projektion in natürlichem oder verkleinertem Massstab auf Photopapier kopiert. Im Prinzip bestehen - abgesehen vom unterschiedlichen Vergrösserungsmassstab - kaum Unterschiede zur klassischen Arbeitsweise eines photographischen Printers.

Beim zweiten Verfahren präsentiert sich die Technologie merklich verschieden. Hier wird nämlich das Vorlagenegativ zunächst durch einen optischen Abtaster in eine grosse Anzahl einzelner Bildpunkte zerlegt, die ihrerseits in drei Farben aufgespalten, als digitale Zahlenwerte dargestellt und abgespeichert werden. Von den derart gespeicherten Bildinhalten einer Anzahl aufeinanderfolgender Negative eines Filmstreifens werden anschliessend über einen Video-Printer geeigneter Bauart (CRT-Belichter, Thermodrucker, Laserdrucker o.ä.) in einem Index-Print zusammengefasste Aufsichtsbilder erzeugt.

Beispiele dieser Technologie finden sich in US-A-4,903,068 und US-A-4,933,773 sowie in EP-A-0 543 233. Bei der US-A-4,903,068 wird zur Erzeugung der Kundenkopie das Vorlagenegativ mit dem unmodulierten Leuchtfleck einer S/W-Kathodenstrahlröhre punktweise abgetastet und über ein Vergrösserungsobjektiv und drei passend gewählte Auszugsfilter farbsequentiell auf Photopapier übertragen. Während dieses Vorgangs wird ein Teil des Abtastlichtstrahls noch vor dem Vergrösserungsobjektiv durch einen teilreflektierenden Spiegel zu einem Photoempfänger mit geeigneter Sammeloptik ausgelenkt. Die dabei erzeugten Bildsignale werden digitalisiert und für jedes Negativ als Datensatz mit drei Farbdichtewerten abgespeichert. Nach jeweils einer vorbestimmten Anzahl kopierter Negative werden die gespeicherten Bildinformationen aus dem Speicher abgerufen und elektronisch zu einem zusammengesetzten Videobild mit einer entsprechenden Anzahl verkleinerter Bilder aufbereitet, welches sich als negatives S/W-Videobild für jeweils eine Teilfarbe auf der Kathodenstrahlröhre darstellen lässt. Dieses Monitorbild kann als Index-Print auf der nächsten freien Stelle des Photopapiers aufbelichtet werden. Während dieses Vorgangs darf sich natürlich kein Vorlagenegativ in der Filmbühne befinden.

Bei der US-A-4,933,773 dient eine gewöhnliche Halogenglühlampe als Lichtquelle für die Projektion des Vorlagenegativs auf das Photopapier. Der Unterschied und Vorteil gegenüber der US-A-4,903,068 liegt darin, dass alle Bildpunkte simultan übertragen werden und die Belichtungszeit daher verkürzt ist. Zur Erzeugung eines Index-Prints wird ein Teil des übertragenen Bildes in Richtung einer Videokamera ausgespiegelt, welche die Bildinformation aufnimmt, nach Farben trennt und digital codiert. Die entsprechenden Datensätze für die kopierten Negative werden in einem ersten Speicher abgelegt. Aus diesem werden die Daten für eine Gruppe von jeweils N aufeinanderfolgenden Negativen in ausgedünnter Form in einen zweiten Speicher übernommen, der sie zu einer Matrix mit N Elementen gruppiert. Diese Bildinformation lässt sich nach D/A-Wandlung als negativer Index-Print auf einer Kathodenstrahlröhre darstellen und mittels eines Farbfiltersatzes und eines Schwenkspiegels im Abbildungsstrahlengang des Printers auf das Photopapier übertragen. Sie kann auch dazu verwendet werden, nach Durchlauf durch einen Negativ-Positiv-Wandler als Index-Print auf einem Farbmonitor angezeigt zu werden.

Die EP-A-0 543 233 hat einen photographischen Printer zum Gegenstand, bei welchem die Abtaststation zur Analyse der Vorlagenegative und die Kopierstation getrennt sind. Die Daten aus der Abtaststation werden einerseits einem Belichtungszeitrechner zugeleitet, welcher die Kopierstation steuert, andererseits einem Index-Print-Generator, der die Daten der einzelnen Negative aufbereitet und als Matrix abspeichert. Diese dient als Vorlage für die Erzeugung eines Index-Prints auf einem Video-Printer. Alternativ kann der Index-Print auch auf das Photopapier des photographischen Printers aufbelichtet werden, falls dessen Lichtquelle eine Kathodenstrahlröhre ist, d.h. einen Bildaufbau Punkt um Punkt erlaubt.

Den oben erwähnten bekannten Lösungen ist das Merkmal gemeinsam, dass der Index-Print, falls er auf photographischem Papier erzeugt werden soll, immer mittels einer Kathodenstrahlröhre aufbelichtet wird, auf welcher die ganze Bildmatrix aus verkleinerten Einzelbildern dargestellt wird.

Die US-A- 4,922,285 beschäftigt sich mit einem medizinischen Anwendungsbereich, und zwar der Computer-Tomographie. Hierbei werden von Tomogrammen Index-Prints hergestellt. Als Lichtquelle dient eine Kathodenstrahlröhre (CRT), die von Fall zu Fall nur ein Einzelbild darstellt. Dieses wird mittels eines Objektivs in verkleinerter Form auf den photographischen Film projiziert, wobei CRT und Objektiv baulich eine Projektionseinheit bilden, die auf einem Führungselement quer zur Transportrichtung des Films mechanisch versetzt werden kann. Eine Steuervorrichtung sorgt dafür, dass nach jedem Belichtungsvorgang die Projektionseinheit um einen gewissen Betrag versetzt wird, damit die verkleinerten Bilder auf dem Film in Querrichtung nebeneinander zu liegen kommen. Desgleichen sorgt die Steuereinrichtung dafür, dass der photographische Film mittels eines Transportrollenpaares um einen gewissen Betrag in seiner Längsrichtung verschoben wird, wenn eine Querreihe mit belichteten Bildfeldern aufgefüllt ist und eine weitere Querreihe auf dem Film Platz findet. Das Verfahren wir fortgesetzt, bis die vorgesehene Matrix an Bildfeldern auf dem Film belichtet ist. Der erzeugte Index-Print ist kein Aufsichtsbild sondern ein Negativ. Ferner ist über die Zuordnung von Nummern der Bilder auf dem Index-Print zu den Originalbildern auf der Kathodenstrahlröhre in der Druckschrift nichts ausgesagt.

Neuere Entwicklungen im Bereich der photographischen Materialien lassen es als wünschenswert erscheinen, Index-Prints zukünftig auch im Bereich der normalen Amateurphotographie und der damit verbundenen photographischen Kopieranstalten anzuwenden, d.h. ohne den Umweg über Videotechnologie. Massgebend dafür sind insbesondere neue Filmkassetten, wie sie etwa in der US-A-5,319,407 beschrieben sind. Diese sind dadurch gekennzeichnet, dass sie den Film nicht wie konventionelle Kassetten nur bis zur Entwicklung des belichteten Films aufnehmen, sondern nach Erledigung der Bearbeitungsvorgänge im Photolabor zusätzlich als Aufbewahrungsgefäss für diesen dienen. Vom Finishinglabor geht demnach der kopierte Film ungeschnitten in der Kassette an den Auftraggeber zurück. Ohne spezielle Werkzeuge kann dieser ihn nicht herausnehmen und betrachten. Der Film ist damit gegen Fingerabdrücke und Staub geschützt. Nachbestellungen einzelner Bilder sind möglich, falls von ihnen eine Vergrösserung existiert, die mit einer Bildnummer gekennzeichnet ist, welche mit jener auf dem Negativ übereinstimmt. Einfacher und für Archivierungszwecke dienlicher ist die Rücksendung eines Index-Prints an den Auftraggeber zusammen mit dem entwickelten Film in der Kassette. Für die Nachbestellung interessante Bilder lassen sich bequem und sicher anhand der Bildfeldnummern identifizieren.

Gemäss der EP-A-0 588 331 sind überdies schmälere Filme in einem Breitenbereich von 15 bis 30 mm zu erwarten, mit fester Vorgabe der Bildzentren wie beim älteren Format 126, jedoch mit einer Auswahl von Seitenverhältnissen (Bildlänge zu Bildhöhe) im Bereich von etwa 1.4 bis 3.0. Die neuen Filme eignen sich hervorragend für die automatische Verarbeitung, bieten sie doch eindeutige Positionierhilfen und stellen sie die Bildfeldnummern visuell, in Barcode und auf einer Magnetspur dar.

Es ist ein Hauptzweck der Erfindung, auf photographischen Printern bei der Erzeugung von Aufsichtsbildkopien ab einem Negativ-Filmstreifen Index-Prints anzulegen, auf denen eine Anzahl aufeinanderfolgender Negative dieses Filmstreifens in natürlichem oder verkleinertem Abbildungsmassstab zusammen mit der dazugehörigen Bildfeldinformation, insbesondere der dazugehörigen Bildfeldnummer wiedergegeben werden.

Es ist ein weiterer Zweck, die einzelnen Vorlage-Negative rein optisch auf den Index-Print zu übertragen, unter Verwendung der vorhandenen Lichtquellen.

Ein zusätzlicher Zweck besteht darin, die Teilbilder auf dem Index-Print in der dem Original in der Natur entsprechenden Orientierung (seitenrichtig und aufrechtstehend) darzustellen.

Noch ein Zweck ist es, die individuell korrigierten Teilbilder des Index-Prints mit den gleichen Dichte- und Farbkorrekturen wiederzugeben, die für die Bilder der Produktionskopien angewendet werden.

Ein anderer Zweck liegt darin, auf dem Index-Print zusätzliche Informationen anzubringen, die beispielsweise Aufschluss über den Namen des verarbeitenden Labors, Datum der Verarbeitung, Typ des kopierten Films, Film-Identifikations-Nummer und ähnliches geben.

Ein weiterer Zweck ist es, sogenannte Proof Prints (Archivkopien) zu erzeugen, die ihrem Wesen nach Index-Prints sind, jedoch im Gegensatz zu diesen die Vorlage-Negative in leicht vergrössertem Massstab wiedergeben und daher in der Regel grössere Papierformate erfordern, wie sie auf gewissen Minilabortypen möglich sind.

Noch ein Zweck besteht darin, auf einem Printer für das Umkehrverfahren Index-Prints für Diapositive zu erzeugen.

Die Aufgabe der Erfindung besteht somit im wesentlichen darin, ein Verfahren sowie eine entsprechende Vorrichtung zur Erzeugung von Index-Prints von einer Anzahl von photographischen Kopiervorlagen anzugeben, welches Verfahren auf einem photographischen Printer durchführbar und mit relativ geringem apparativem Aufwand realisierbar sein soll, so dass auch die entsprechende Vorrichtung relativ einfach und unter grösstmöglicher Nutzung von in einem photographischen Printer üblicherweise bereits vorhandenen Komponenten realisierbar ist.

Das diese Aufgabe erfüllende erfindungsgemässe Verfahren zur Erzeugung von Index-Prints auf einem photographischen Printer ist durch die Merkmale des unabhängigen Verfahrensanspruchs 1 gekennzeichnet. Es erzeugt die Index-Prints auf rein optisch-photographischem Weg und besteht dem Wesen nach typischerweise darin,
- einen Vorlage-Filmstreifen in einer Abtaststation Negativ für Negativ punktweise abzutasten, aus den Abtastsignalen Dichtewerte für die Belichtungszeitbestimmung in drei Teilfarben und Angaben über die Bildfeldnummer des abgetasteten Negativs zu gewinnen und diese Informationen unter Zuordnung der ermittelten drei Teilbelichtungszeiten zu der entsprechenden Bildnummer in einem Speicher abzulegen,
- alle Negative des Vorlage-Filmstreifens unter Verwendung der ermittelten Belichtungszeiten der Reihe nach in vergrössertem Massstab auf Photopapier zu belichten und
- in einem weiteren Schritt eine Anzahl aufeinanderfolgender Negative des Filmstreifens in natürlichem oder reduziertem Massstab in Matrixform auf ein einziges Blatt des genannten Photopapiers zu belichten, wobei
- die jedem Negativ zugeordnete Bildfeldnummer ebenfalls aufbelichtet wird und
- die aus dem anfänglichen Abtastvorgang gespeicherten Belichtungsdaten als Basis für die Belichtung der einzelnen Teilbilder herangezogen werden und
- nebst den Belichtungen der Negative weitere Informationen im Zusammenhang mit dem Filmstreifen aufbelichtet werden,
- woraufhin das Photopapier mit den Vergrösserungen und den Index-Prints entwickelt wird.

Die erfindungsgemässe Vorrichtung zur Erzeugung von Index-Prints auf einem photographischen Printer ist durch die Merkmale des unabhängigen Vorrichtungsanspruchs 29 gekennzeichnet. Sie erzeugt die Index-Prints auf rein optisch-photographischem Weg und umfasst typischerweise im wesentlichen ein lichtdichtes Gehäuse, an und in welchem die folgenden wesentlichen Baugruppen untergebracht sind: ein Lampenhaus mit vorzugsweise einer Halogenlampe als Lichtquelle, eine Filmbühne für die Aufnahme des Vorlage-Filmstreifens und dessen Transport, eine Abtaststation für die punktweise Abtastung der Bildfläche der Negative und die Ermittlung von deren Bildfeldnummern und filmspezifischer Daten, eine zugehörige Auswerte- und Speicherelektronik, ein Vergrösserungsobjektiv, ein Index-Print-Objektiv, eine Papierbühne für Transport und Positionierung des photographischen Papiers, ein Vorratsmagazin für dieses Papier und ein weiteres Magazin für die Aufnahme des belichteten Papiers oder eine lichtgeschützte Uebergabestation an eine nachgeschaltete Papierentwicklungsmaschine, sowie einen Rechner für die Koordination und Steuerung der Abläufe.

Vergrösserungsobjektiv und Index-Print-Objektiv sind im Strahlengang gegeneinander austauschbar und schliessen sich in der Anwendung gegenseitig aus. Das Index-Print-Objektiv liegt wegen des kleineren Abbildungsmassstabes näher beim Photopapier als das Vergrösserungsobjektiv. Im Gegensatz zu letzterem ist es in aktivem Zustand quer zur Transportrichtung des Photopapiers verschiebbar. Im Zusammenwirken mit der Papiervorschub-Steuerung ermöglicht diese Anordnung die Abbildung der Negative in Form einer Matrix auf dem Photopapier. Alternativ kann auch eine Verschiebbarkeit des Index-Print-Objektivs in zwei Dimensionen vorgesehen sein.

Weitere vorteilhafte Ausgestaltungen und Varianten des erfindungsgemässen Verfahrens und der entsprechenden Vorrichtung sind in den abhängigen Ansprüchen beschrieben.

Die Erfindung wird nachstehend anhand von verschiedenen Ausführungsbeispielen unter Bezugnahme auf die Zeichnung näher erläutert. In dieser zeigen:
- Fig. 1a: eine typische Normalkopie (Normalprint),
- Fig. 1b: einen der Normalkopie von Fig. 1a zugeordneten Index-Print,
- Fig. 2: eine schematische Darstellung des Printerteils eines Minilabors in einer Ausführungsform nach der Erfindung,
- Fig. 2a: ein Detail aus Fig. 2 in um 90 gedrehter Ansicht,
- Fig. 3: die Papierlauf-Baugruppe des Minilabors nach Fig. 2 detaillierter in perspektivischer Form,
- Fig. 4: die Filmlauf-Baugruppe des Minilabors nach Fig. 2 detaillierter in schematischer Form,
- Fig. 5: einen Index-Print-Filmstreifen zur verfahrensgemässen Verwendung,
- Fig. 6a: einen Lösungsvorschlag zur Aufbelichtung variabler Daten auf den Index-Print in schematisierter Form,
- Fig. 6b: eine Draufsicht auf Fig. 6a,
- Fig. 7a: Einzelheiten zur verkleinerten Aufbelichtung der Negative auf die Felder der Index-Print-Matrix,
- Fig. 7b: eine Draufsicht auf Fig. 7a,
- Fig. 8: eine Variante zur Positionierung der Index-Print-Negative mit den Rahmen bildern,
- Fig. 9: einen Lösungsvorschlag zur Einbelichtung von Bildfeldnummern und variablen Daten in das Rahmenbild,
- Fig. 10: einen Lösungsvorschlag zur Einbelichtung variabler Daten in die Randzone von Index-Prints,
- Fig. 11: ein Beispiel eines Streulichtabschirmungsmittels und
- Fig. 12: einen weiteren vorteilhaften Lösungsvorschlag zur Ein- bzw. Aufbelichtung von Bildfeldnummern und variablen Daten in bzw. auf den Index-Print.

Bei der nachstehenden Beschreibung der bevorzugten Ausführungsbeispiele anhand der Zeichnung sind identische oder von der Funktion her gleichwertige Teile mit den gleichen Bezugszeichen versehen. Der Einfachheit und des leichteren Verständnisses wegen wird die Erfindung mit Bezug auf den Printerteil eines Minilabs für Negativfilme beschrieben. Die Ausführungen gelten jedoch sinngemäss auch für Rollenprinter und für Geräte zur Verarbeitung von Umkehrfilmen sowie gerahmten Diapositiven. Ferner befasst sich die Beschreibung im wesentlichen mit den gegenüber dem Stand der Technik neuen Aspekten und apparativen Komponenten, wobei vorausgesetzt wird, dass der Fachmann moderne computergesteuerte Printer und entsprechende Herstellungsverfahren für photographische Kopien kennt und dazu keiner näheren Erläuterung bedarf. Typische Beispiele für moderne photographische Printer sind u.a. in den eingangs zitierten Druckschriften sowie beispielsweise auch in den US-Patentschriften US-A-4 951 084, US-A-5 016 043, US-A-5 036 351, US-A-5 041 869, US-A-5 119 125, US-A-5 164 765 und US-A-5 309 199 beschrieben.

Des weiteren wird im folgenden des leichteren Verständnisses wegen vom Regelfall ausgegangen, dass die individuellen Bildfeldinformationen, die den einzelnen Bildern des Index-Prints zugeordnet werden, die üblicherweise auf dem Filmstreifen bzw. den Kopiervorlagen vorhandenen und von diesen durch Abtastung abgelesenen und gespeicherten Bildfeldnummern sind. Die Erfindung ist jedoch nicht auf solche Bildfeldnummern beschränkt. So können als Bildfeldinformationen auch andere bildbezogene Bildfeldidentifikationsdaten verwendet werden, die z.B. während der Herstellung der Index-Prints individuell erzeugt werden oder in geeigneter Weise fest vorgegeben sind. Die Art der aufgebrachten bildbezogenen Bildfeldidentifikationsdaten kann z.B. auch in Abhängigkeit von auf dem Filmstreifen vorhandenen und von diesem abgelesenen film- und/oder bildfeldbezogenen Zusatzinformationen gewählt werden.

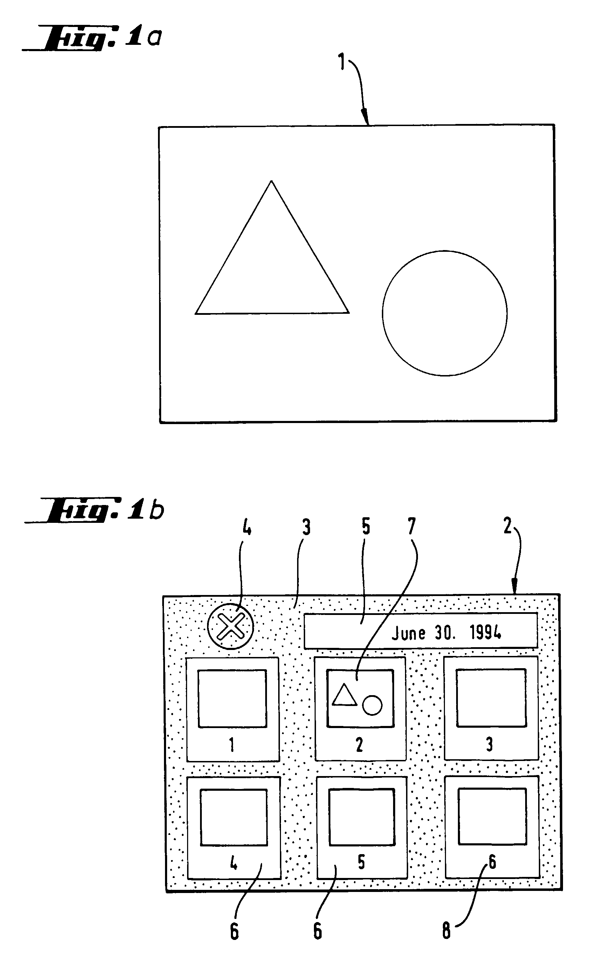

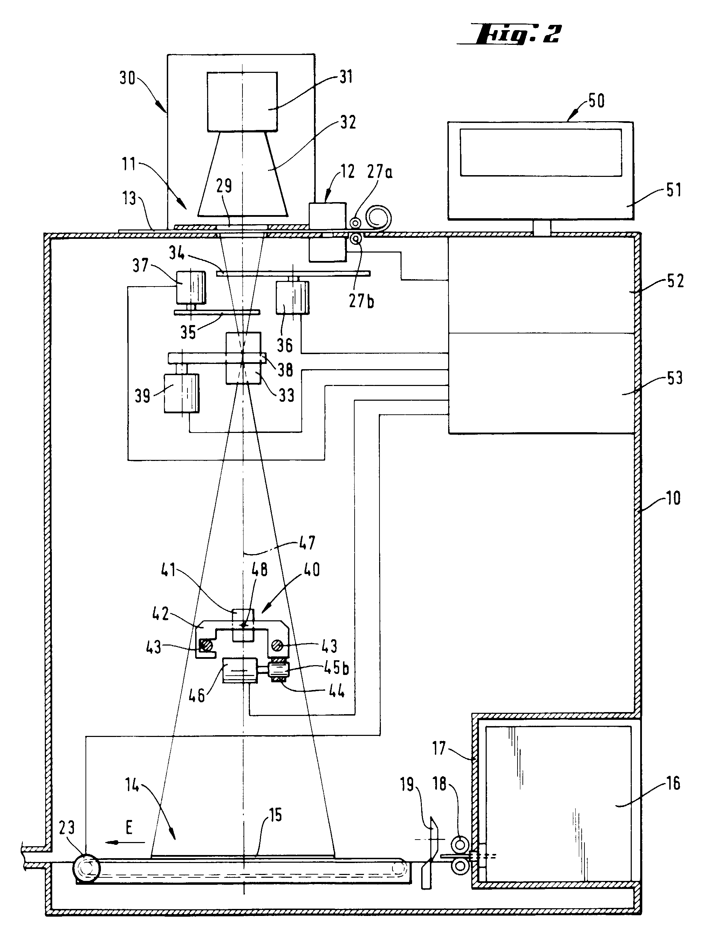

Fig. 1a zeigt ein Beispiel einer normalen photographischen Kopie (Vergrösserung, Normalprint), Fig. 1b zeigt ein Beispiel eines der normalen Kopie (Normalprint) gemäss Fig. 1a zugeordneten Index-Prints gemäss der Erfindung. Bei der Normalkopie 1 ist ein einzelnes Sujet dargestellt. Index-Print 2 enthält eine Matrix von mehreren Sujets in verkleinerter Darstellung. In einem Rahmenbild 3, das für alle Index-Prints gleichen Papierformats unverändert bleibt, ist Platz für ein Logo 4 des Verarbeitungslabors vorgesehen, ebenso ein Feld 5 für Informationen, die auftragsabhängig (Film-Identifikations-Nummer, FID) oder sonstwie veränderlich (Datum) sind. In matrixförmig nach Zeilen und Spalten angeordneten Aus sparungen 6 des Rahmenbildes 3 finden die verkleinerten Index-Bilder 7 sowie die zugehörigen Bildfeldnummern 8 Platz. Die Anzahl der Index-Bilder bzw. der Elemente der Matrix richtet sich dabei nach den Abmessungen der Papierkopie, dem Verwendungszweck und der verlangten Interpretierbarkeit der photographischen Information. Sie kann von einigen wenigen bis zu sämtlichen auf einem Filmstreifen enthaltenen Bildern reichen.

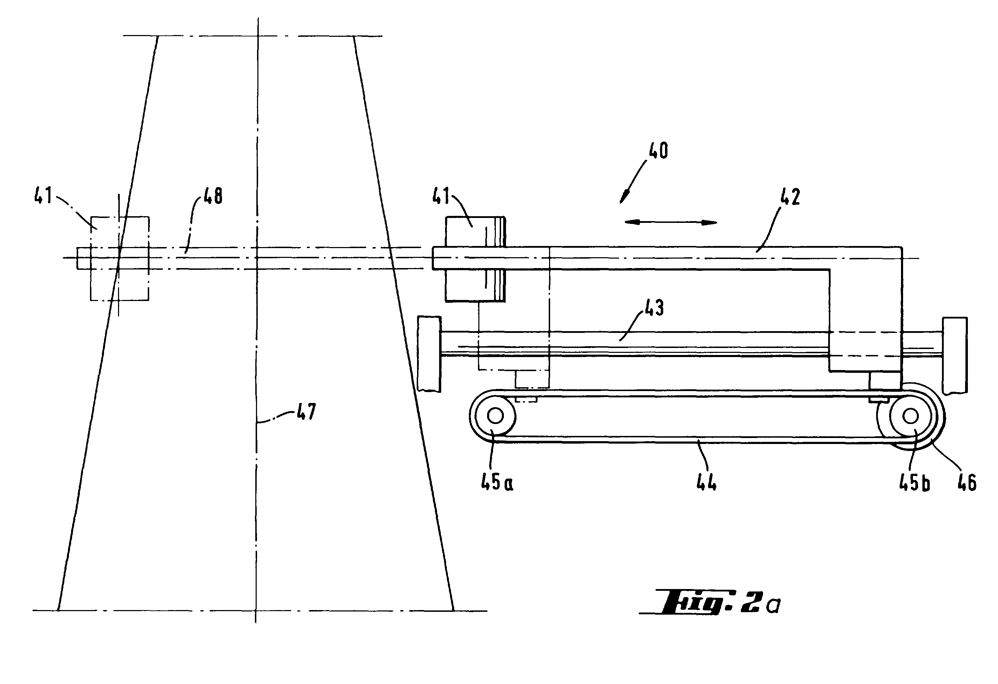

Fig. 2 stellt den Printerteil eines Minilabors dar, welches bekanntlich definitionsgemäss Filmentwicklung, photographische Belichtung und Papierentwicklung in einem Gerät vereinigt und im vorliegenden Fall nebst Normalkopien erfindungsgemäss zusätzlich noch Index-Prints erzeugen kann. In einem Gehäuse 10 ist eine Filmbühne 11 mit zugehöriger Abtaststation 12 zur Aufnahme eines Filmstreifens 13 angeordnet, überdies eine Papierbühne 14 zur Aufnahme eines Einzelblatts Photopapier 15 aus einer Papierkassette 16. Diese ist an eine Grundplatte 17 angedockt. Ein Rollenpaar 18 fördert das Photopapier auf die Papier bühne. Ein Rollmesser 19 schneidet es auf die verlangte Blattlänge.

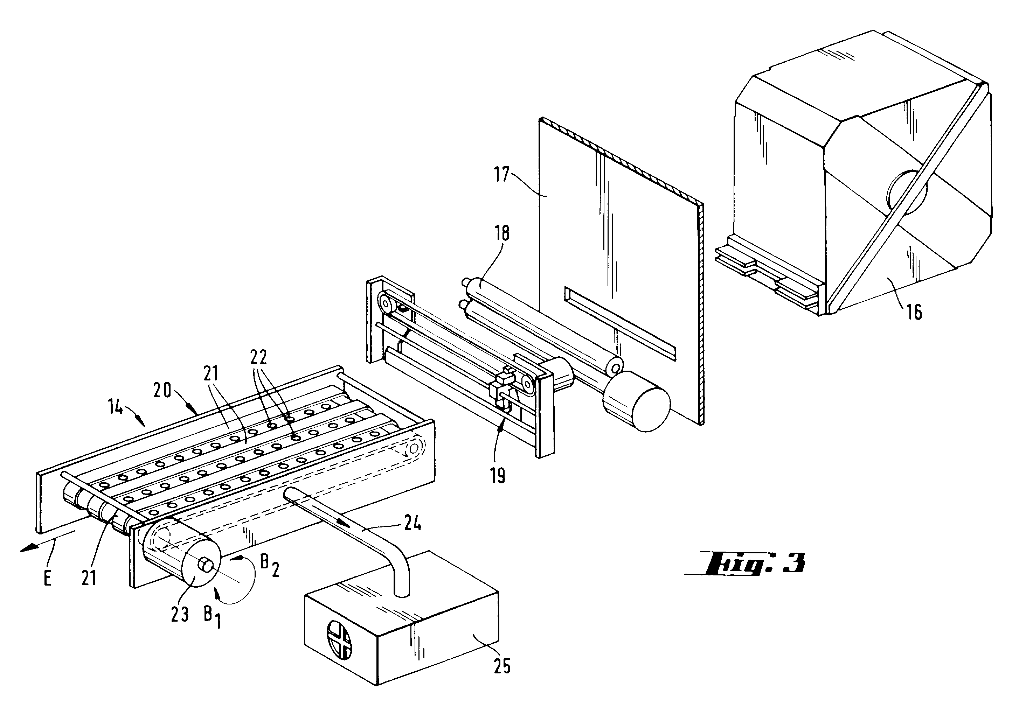

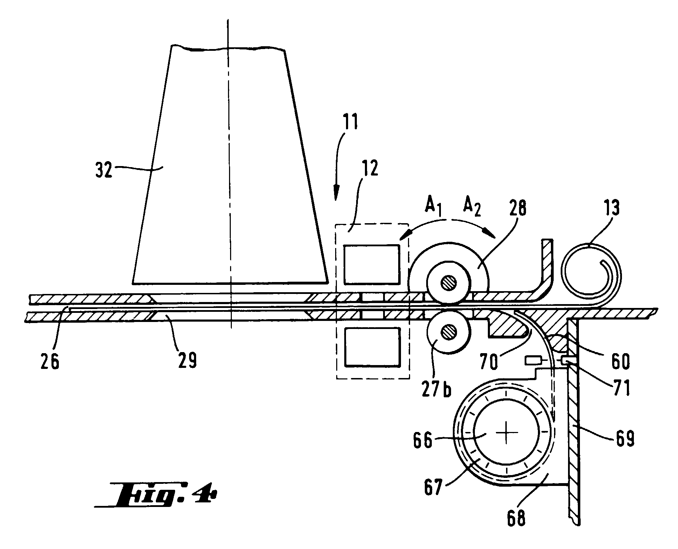

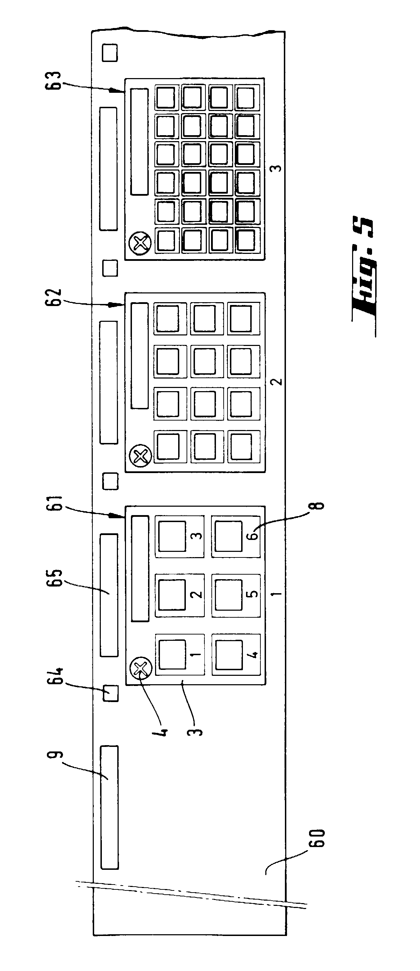

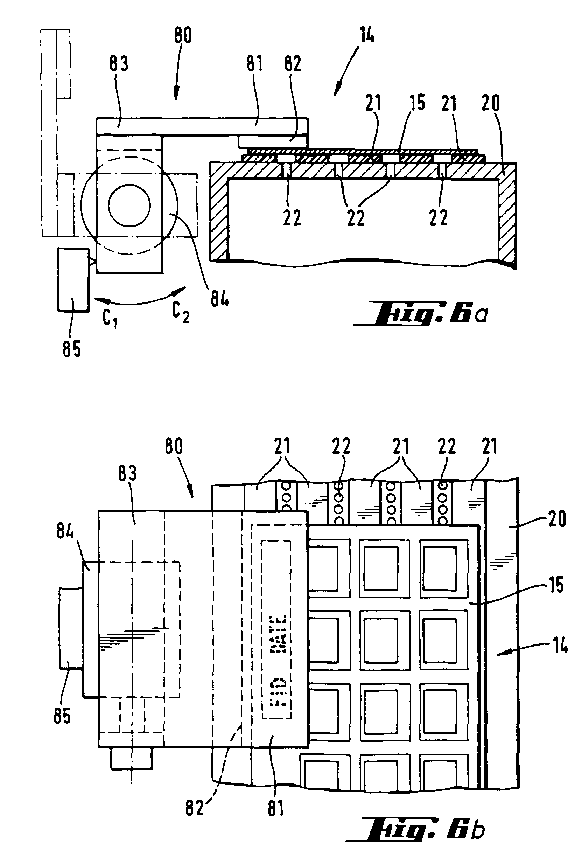

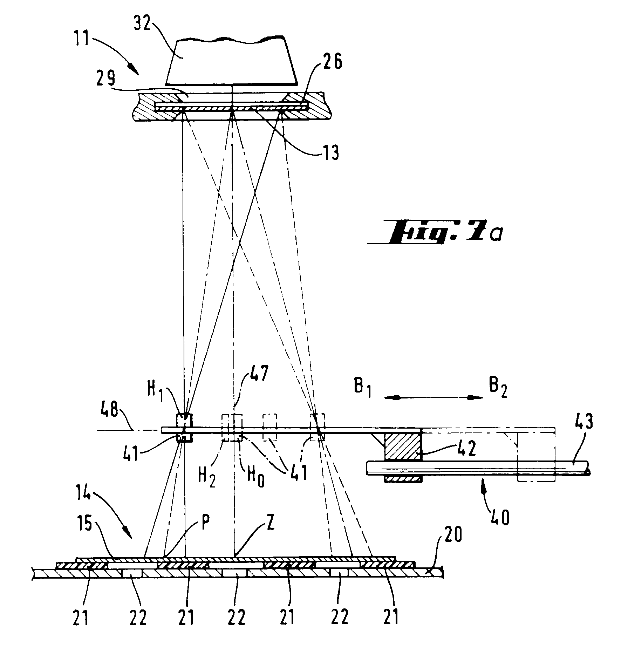

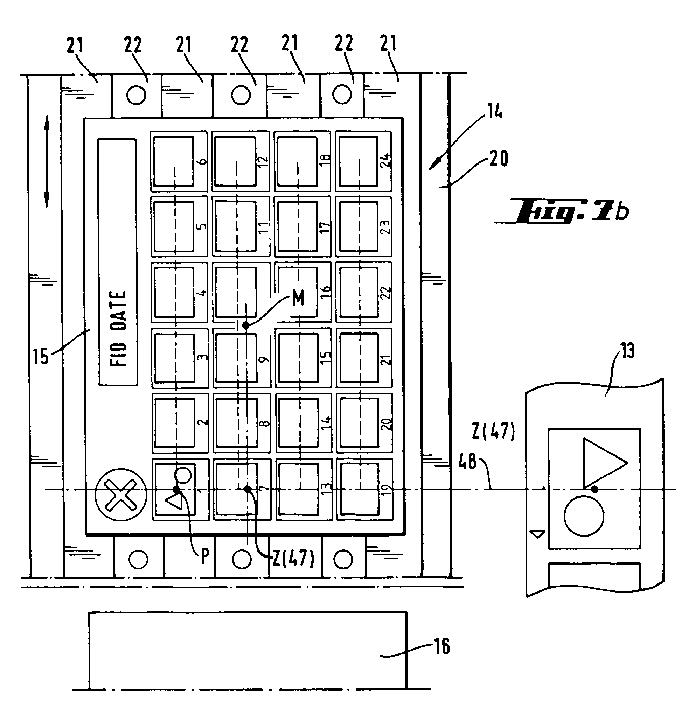

Fig. 3 zeigt die Papiertransport-Gruppe zum besseren Verständnis in perspektivischer Ansicht. Insbesondere ist die Papierbühne 14 detaillierter dargestellt.

Sie umfasst eine Vakuumkammer 20, die an ihrer Oberseite Transportbänder 21 zwischen Lochreihen 22 zum Kammerinnern aufweist. Die Transportbänder 21 werden von einem reversierbarenSchrittmotor 23 gemeinsam angetrieben. Die Vakuumkammer 20 ist über eine Leitung 24 mit einer Vakuumpumpe 25 verbunden, welche in der Kammer einen leichten Unterdruck zum Festhalten des Photopapiers erzeugt.

Fig. 2 und Fig. 2a zeigen weiter ein Projektionssystem 30, bestehend aus Lichtquelle 31, Lichtschacht 32 und Projektionsobjektiv 33. Zur Einfärbung des Kopierlichts ist ein Farbfilterrad 34 vorhanden, mit einer Filterbestückung, die zumindest die drei Grundfilter Rot, Blau und Grün enthält. Zur Blockierung und Freigabe des optischen Strahlengangs dient ein Verschluss 35 (oder eine spezielle Dunkel-Stellung des Filterrads). Diese Elemente werden von Motoren 36 bzw. 37 angetrieben. Das Projektionssystem bildet jeweils ein Negativ des Filmstreifens 13 auf das unbelichtete Photopapier 15 ab. Das Vergrösserungsobjektiv 33 ist auf einem Schwenkarm 38 oder einem Objektiv-Karussell befestigt, welcher auf der Welle eines Motors 39 sitzt und das Objektiv 33 vollständig aus dem Strahlenraum ausschwenken kann, der durch die Abbildungsstrahlen zwischen Negativ und Photopapier gebildet wird.

Für die Aufbelichtung der Index-Prints ist eine Index-Print-Baugruppe 40 mit einem Index-Print-Objektiv (IP-Objektiv) 41 vorhanden. Dieses sitzt auf einem Transportschlitten 42, der seinerseits auf einem Paar Führungsschienen 43 montiert ist. Der Schlitten 42 wird von einem Zahnriemen oder Seilzug 44 angetrieben, der über ein Rollenpaar 45 a,b läuft. Ein Motor 46 ist über seine Welle mit der Antriebsrolle 45 b verbunden. Er kann das IP-Objektiv bei Bedarf in den Abbildungsstrahlengang, d.h. den Bereich der optischen Achse 47 einfahren. Diese wird durch die Verbindungslinie des Symmetriezentrums der Negativmaske in der Filmbühne und des Hauptpunktes des Projektionsobjektivs 33 bestimmt.

In Fig. 2a ist die Index-Baugruppe 40 im Interesse der Anschaulichkeit separat und um die optische Achse 47 um 90 verschwenkt dargestellt. In Wirklichkeit verläuft die Bewegungsrichtung des IP-Objektivs entsprechend Fig. 2 rechtwinklig zur Transportrichtung des Papiers.

Am und im Gehäuse 10 ist eine Elektronikbaugruppe 50 für die Bedienung und Steuerung des Gerätes angebracht, nämlich ein Tastatur- und Anzeigefeld 51, eine Auswerte- und Speichereinheit 52 für die Berechnung der Belichtungszeit und die Ermittlung der Bildfeldnummern, sowie ein Rechner 53 für die Steuerung der Abläufe.

Die Funktionsweise dieses Printers wird nun im Detail beschrieben. Es sei angenommen, dass die entwickelten Filme als Einzelfilme (Filmstreifen) vorliegen und von Hand eingelegt und entfernt werden und dass das Photopapier jeweils unmittelbar vor der Belichtung in einzelne Blätter geschnitten und anschliessend im (an sich bekannten) Einzelblattverfahren entwickelt wird. Ausserdem sollen von einem bestimmten Filmstreifen jeweils zunächst die einzelnen Negative vergrössert und anschliessend vom ganzen Filmstreifen ein Index-Print erstellt werden. Das Papierformat sei vorgegeben, ebenso das Filmformat. Das Projektionsobjektiv 33 und das Index-Print-Objektiv 41 seien in an sich bekannter Weise als Zoom- oder Wechsel-Objektive ausgebildet, um unterschiedlichen Papierformaten und Index-Prints mit unterschiedlichen Bilderzahlen Rechnung zu tragen.

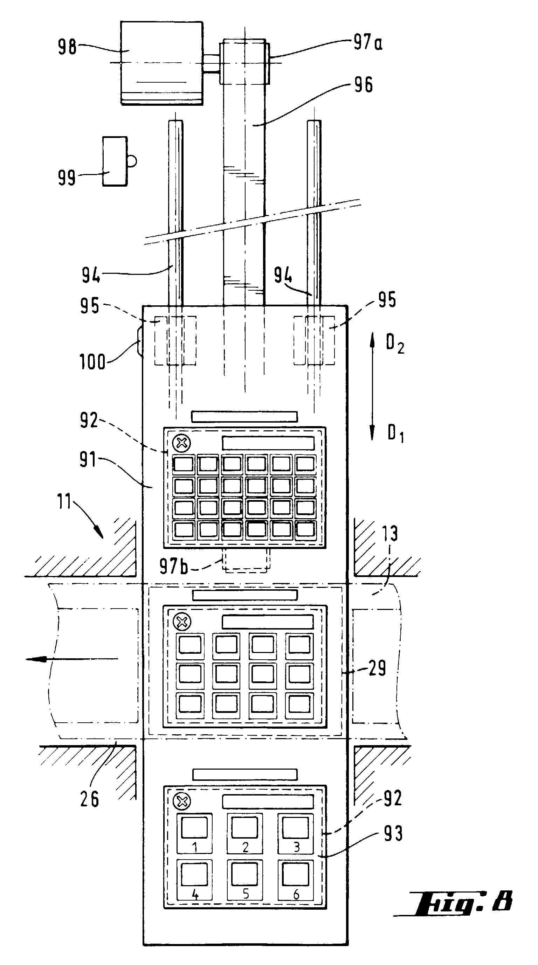

Anhand von Fig. 4 werden zunächst Einzelheiten der Filmbühne 11 erläutert.

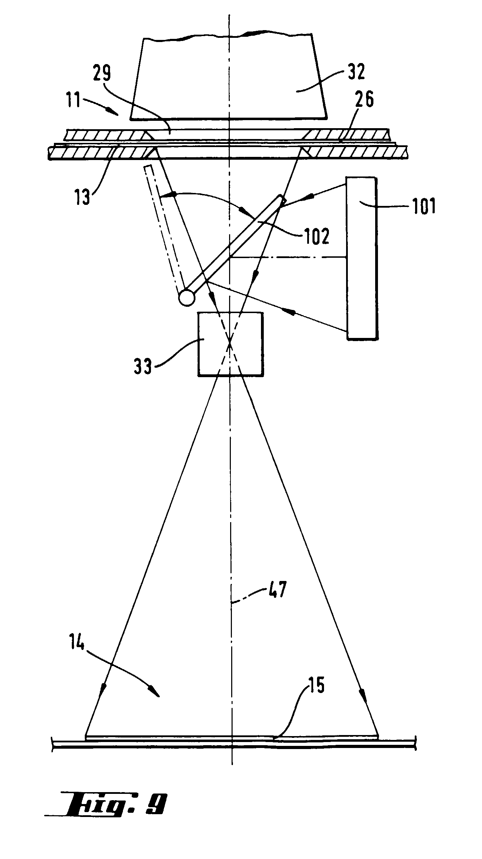

Ein Filmkanal 26 dient als Führung für den Filmstreifen 13. Ein Transportrollenpaar 27 a,b, das von einem reversierbaren Schrittmotor 28 angetrieben wird, fördert den Film mit gleichförmiger Geschwindigkeit durch den Filmkanal. Der Ablauf ist wie folgt: Aufgrund eines Startbefehls beginnt Schrittmotor 28 im Drehsinn A₂ zu rotieren. Filmstreifen 13 wird rechts in der Negativbühne 11 in den Filmkanal 26 eingelegt und dabei von den Transportrollen 27 a,b erfasst, die den Weitertransport veranlassen. Dabei durchläuft als erstes die Vorspannzone des Filmstreifens die Abtaststation 12 und anschliessend das Kopierfenster 29. Unter der Annahme, dass die Vorspannzone filmspezifische Daten wie die Film-Identifikations-Nummer (FID) und die Anzahl der Bildfelder in Form eines Barcode (9 in Fig. 5) enthält, werden diese in der Abtaststation 12 erfasst und in der Auswertestation 52 abgespeichert. Die Abtaststation kann beispielsweise aus einem linearen Photozellenarray für die Dichteanalyse des Bildinhaltes und einem Barcodeleser für die Informationen in einer Randspur des Negativs (z.B. FID- und Bildfeldnummern) sowie einem Sensor für Markierungen auf dem Filmstreifen bestehen, welche die genaue Lage jedes einzelnen Bildfeldes definieren. Während des Filmtransports werden diese Markierungen von der Abtaststation erfasst und deren Signale von der Elektronik ausgewertet, um den Transport anzuhalten, sobald ein Negativ im Fenster der Filmbühne kopierbereit positioniert ist. Beim geschilderten Ablauf ist dies erstmals für Negativ Nr. 1 der Fall. Die Belichtungszeiten für das positionierte Negativ wurden beim gleichförmigen Durchlauf des Negativs durch die Abtaststation 12 in der Auswertestation 52 aus den gemessenen Dichtedaten berechnet und im zugehörigen Speicher abgelegt. Auch die aus dem DX-Code in der Randspur des Negativs entschlüsselten Daten wie Filmtyp und Bildfeldnummer wurden gleichenorts gespeichert.

Unterdessen (Fig. 3) haben die Antriebsrollen 18 unbelichtetes Photopapier aus dem Papiermagazin 16 unter dem Messer 19 auf die Papierbühne 14 vorgeschoben. Dabei wurde über die Anzahl der Schritte des Antriebsmotors die Vorschublänge bestimmt und beim Erreichen der Soll-Länge das Papier vom Messer 19 geschnitten. Das Vakuum in der Vakuumkammer 20 der Papierbühne 14 ist dabei aktiviert. Es hält das geschnittene Blatt Photopapier auf den Transportbändern fest, während Schrittmotor 23 solange in Drehrichtung B₂ rotiert, bis dieses unter der optischen Achse zentriert ist.

Als nächste Operation wird die Belichtung ausgelöst. Sie läuft mehrstufig ab, indem aufgrund der ermittelten und in Station 52 gespeicherten Belichtungszeiten Verschluss 35 durch Ausschwenken aus seiner Ruhelage den Strahlengang freigibt, während Filterrad 34 nacheinander drei Farbfilter (R,G,B) für die Dauer der jeweils errechneten Belichtungszeit in den Strahlengang einschwenkt. Am Ende der Belichtung geht Verschluss 35 wieder in seine Sperrstellung. Das belichtete Blatt Photopapier 15 wird zum Papierentwicklungsteil (nicht dargestellt, Pfeil E) abtransportiert. Daraufhin kann ein neuer Transport- und Belichtungszyklus gestartet werden. Das Antriebsrollenpaar 18 schiebt eine entsprechende Länge neuen Photopapiers aus dem Papiermagazin 16 nach, die vom Messer 19 geschnitten wird. Filmstreifen 13 wird bis zum nächsten Negativ (Nr. 2) transportiert und dabei analysiert. Die anschliessende Belichtung beendet diesen zweiten Zyklus. Der Vorgang wiederholt sich automatisch solange, bis der ganze Filmstreifen kopiert ist. Nach Belichtung des letzten Negativs im Filmstreifen schiebt der Filmtransport diesen vollständig aus der Filmbühne hinaus, und der Papiertransport übergibt das letzte belichtete Blatt Photopapier an die Entwicklungsstation.

Die nächste Aufgabe besteht darin, den Index-Print für diesen Filmstreifen zu erzeugen. Im ersten Schritt dazu ist das Rahmenbild 3 mit dem Logo 4 aufzubelichten. Dafür ist ein Vorlage-Negativ in der Filmbühne erforderlich. Dieses kann gemäss dem Lösungsvorschlag nach Fig. 4 die gleichen Führungs- und Transportelemente benützen wie vorher der Filmstreifen. Der Filmführungskanal 26 ist nach den vorangegangenen Operationen frei von Filmstreifen 13. Er kann daher vorübergehend einen speziellen Index-Print-Filmstreifen (IP-Filmstreifen) 60 aufnehmen, der format-und typenmässig mit dem Streifen 13 übereinstimmt, jedoch gemäss Fig. 5 nur wenige Bildfelder 61, 62, 63 enthält. Diese entsprechen den Rahmenbildern 3 mit Logo 4 und Bildfeldnummern 8 des Index-Prints 2, wobei etwa Matrixfelder mit unterschiedlicher Zahl der Elemente den verschiedenen handelsüblichen Filmlängen zugeordnet sein können. Der IP-Fimstreifen ist in einer speziellen, von einem Schrittmotor 66 über eine Magnetkupplung 67 angetriebenen Filmkassette 68 enthalten, die auf einer Platte 69 unter der Filmbühne 11 angebracht ist. Der Filmstreifen 60 hat eine Ruheposition in einem Führungskanal 70, welche durch eine Lichtschranke 71 überwacht wird.

In einem ersten Schritt zur Aufbelichtung des Index-Prints wird von Motor 66 bei eingeschalteter Magnetkupplung 67 der IP-Filmstreifen 60 aus dem Führungskanal 70 in den Führungskanal 26 gestossen und dabei von den gleichzeitig in Rotation versetzten Transportrollen 27 a,b erfasst, die den Weitertransport übernehmen, während die Magnetkupplung 67 ausgeschaltet und Motor 66 stillgesetzt werden. In der Abtaststation 12 wird die Positionsnummer des durchlaufenden Negativs erfasst. Sie ist einer bestimmten Filmlänge zugeordnet, welche in der Auswertestation 52 mit der gespeicherten Länge des vorgängig kopierten Filmstreifens verglichen wird. Falls die beiden Längen übereinstimmen, wird das entsprechende Rahmenbild (z.B. 62) im Kopierfenster der Filmbühne positioniert.

Simultan mit diesen Aktionen hat der Papiertransport einen Vorschub ausgelöst, das Photopapier um eine Blattlänge vorgeschoben und geschnitten und das Blatt auf der Papierbühne symmetrisch zur optischen Achse positioniert. Nachdem nun alle erforderlichen Elemente (Negativ, Projektionsobjektiv und unbelichtetes Photopapier) in der richtigen Position sind, kann das Rahmenbild mit vorbestimmter Farbe und Belichtungszeit aufbelichtet werden. Die zugehörigen Parameter werden dem Speicher 52 entnommen. Das Rahmenbild enthält nebst der Bildmatrix mit den Bildfeldnummern nur noch das Firmenlogo. Nach Abschluss der Belichtung schalten sich Magnetkupplung 67 und Schrittmotor 66 wieder ein und ziehen den IP-Film-streifen 60 in seine Ruhestellung zurück. Die Transportrollen 27 a,b müssen während dieses Vorgangs soweit voneinander getrennt werden, dass der Filmstreifen berührungslos zwischen ihnen passieren kann. Diese Trennung kann über nicht dargestellte Magnete oder Motoren in Verbindung mit mechanischen Elementen erfolgen.

Im nächsten Schritt sind die variablen Informationen, beispielsweise Film-Identifikations-Nummer (FID) und Tagesdatum, aufzubelichten. Eine Möglichkeit besteht darin, diese Daten mittels einer LCD-(Flüssigkristall)-Matrix anzuzeigen und im Kontakt auf das Photopapier aufzubelichten. Alternativ kann die LCD-Matrix in den optischen Strahlengang eingespiegelt und vom IP-Objektiv 41 an der ausgesparten Stelle des Rahmenbildes auf dem Photopapier abgebildet werden. Anstelle der LCD-Matrix lässt sich auch eine LED-(Leuchtdioden)-Matrix oder eine Mini-Kathodenstrahlröhre als Display-und Belichtungsmedium einsetzen.

In Fig. 6 ist eine Lösung mit LCD-Matrix und Kontaktbelichtung skizziert. Das Photopapier 15 ruht auf stillstehenden Transportbändern 21 und wird durch den Unterdruck der Vakuumkammer 20 auf diesen fixiert. Eine Belichtungsbaugruppe 80 besteht aus einer Trägerplatte 81 für die LCD-Matrix 82, einem Haltebügel 83 für die Trägerplatte, einem reversierbaren Schrittmotor 84 und einem Endschalter 85. Der Haltebügel 83 ist fest mit der Welle des Schrittmotors 84 verbunden. In der Ruhestellung wird die Trägerplatte in vertikaler Lage ausserhalb des Abbildungsstrahlenganges des Projektionssystems gehalten (in Fig. 6 a gestrichelt skizziert). Zum Aufbelichten der variablen Index-Print-Daten wird als erstes die Trägerplatte um 90 verschwenkt, indem Motor 84 im Drehrichtungssinn C₁ in Gang gesetzt wird, bis Endschalter 85 die richtige Lage der LCD-Matrix 82 auf dem Photopapier anzeigt. Nunmehr kann die LCD-Matrix aktiviert werden. Die benötigte Daten- und Belichtungszeit-Information wird aus dem Speicher 52 geholt. Nach der Belichtungphase wird die LCD-Matrix wieder deaktiviert. Die Trägerplatte mit der Matrix schwenkt daraufhin in ihre Ruhestellung zurück. Die Endlage kann dabei über eine vorbestimmte Anzahl Schritte des Motors 84 festgelegt werden. Die exakte Lage ist dabei unkritisch. Diese Teilbelichtungsaufgabe ist daraufhin abgeschlossen.

Als nächstes sind die verkleinerten Bilder der Negative des Auftrags-Filmstreifens 13 auf die Index-Print-Matrix zu übertragen. Dazu sind einige Vorbereitungsarbeiten notwendig und müssen zunächst die Voraussetzungen im Abbildungssystem geschaffen werden. Zu diesem Zweck wird das Projektionsobjektiv 33 aus dem Strahlengang ausgeschwenkt, durch eine Schwenkbewegung um beispielsweise 90 oder nur soviel wie notwendig, um bei der Belichtung der Index-Prints nicht störend zu wirken. Das Index-Print-Objektiv 41 kann nunmehr eingefahren werden, und zwar bis exakt zur optischen Achse.

Dann ist das Photopapier in Kopierposition für das erste Element der Matrix zu bringen. Weil das IP-Objektiv 41 sich nur in einer Ebene 48 bewegen kann, die durch die optische Achse 47 und eine Senkrechte zur Transportachse des Photopapiers bestimmt ist, muss der Schwerpunkt P des Matrixbildes Nr. 1 in diese Ebene zu liegen kommen. Die Verhältnisse sind in Fig. 7 näher erläutert. Für die Belichtung des Rahmenbildes und der variablen Information lag der Schwerpunkt M des Photopapiers im Durchstosspunkt Z der optischen Achse mit der Papierbühne (Fig. 7 b). Das Photopapier muss demnach um die Distanz M_Z weitertransportiert werden. Zu diesem Zweck treibt Schrittmotor 23 die Transportbänder 21 in der verlangten (Vorwärts-) Richtung an, während das Photopapier dank des Vakuums schlupffrei auf ihnen festgehalten wird. Weiter ist das IP-Objektiv 41 aus seiner bisherigen Lage auf der op tischen Achse (Punkt H₀ in Fig. 7 a) in die neue Lage H₁ zu bringen, die aufgrund der optischen Gesetze exakt zu berechnen und als Parameter für den Antrieb des Objektivschlittens 42 in Speicher 52 abgelegt ist. Schliesslich ist noch Auftragsfilm 13 erneut in der Filmbühne zu positionieren, wobei sicherzustellen ist, dass Bildfeld Nr. 1 im Kopierfenster liegt. Nunmehr lässt sich das erste Bild der Matrix belichten. Die Belichtungsdaten für diesen Vorgang sind vom Erstdurchgang des Filmstreifens her in der Auswerte- und Speicherstation 52 abgelegt. Sie müssen vom Rechner noch modifiziert werden, um dem veränderten Abbildungsmassstab Rechnung zu tragen. Durch den Wegfall der erneuten Analyse des Bildes wird Zeit gewonnen. Ausserdem zeigt der Index-Print genau den gleichen Dichte- und Farbgang wie die Kopien des Erstdurchgangs.

Nachdem das erste Negativ kopiert worden ist, muss das Photopapier 15 so weit rückwärts transportiert werden, dass der Schwerpunkt von Matrixelement Nr. 2 in die Schnittebene 48 mit der optischen Achse fällt. Das IP-Objektiv 41 kann seine Lage vorderhand beibehalten, dagegen muss noch der Filmstreifen 13 um eine Negativlänge vorwärts transportiert werden, d.h. zu Nr. 2. Nachdem die Transporte abgeschlossen sind kann die Belichtung von Bildfeld Nr. 2 durchgeführt werden. Das Verfahren wird sodann wiederholt, bis auf dem Photopapier die letzte Position der ersten Matrixzeile erreicht ist. Als nächstes wird dann das erste Element der zweiten Matrixzeile belichtet. Zu diesem Zweck müssen zunächst das IP-Objektiv 41 verschoben und das Photopapier 15 in jene Stellung vorwärts transportiert werden, die es vorher für die Belichtung von Bildfeld Nr. 1 einnahm. Nunmehr kann die Belichtung der Bildfelder der zweiten Matrixzeile beginnen. Das Verfahren wird fortgesetzt, bis schliesslich der ganze Filmstreifen kopiert und sämtliche Matrixelemente belichtet sind. Damit ist auch die mehrstufige Belichtung des Index-Prints abgeschlossen. Der Filmstreifen kann aus der Filmbühne ausgefahren und das Photopapier kann der Entwicklungsmaschine zugeführt werden. Der Printer ist damit frei für die Bearbeitung des nächsten Filmstreifens.

In der Praxis sind verschiedene Abweichungen von der beschriebenen Ausführungsform möglich. Sie können zu zweckmässigeren Abläufen oder verbesserter Leistung führen.

Im Bereich des Filmtransports kann beispielsweise eine der folgenden Möglichkeiten gewählt werden (Aufzählung nicht abschliessend):
1) Normalkopien im Vorwärtslauf, IP-Kopien im Rückwärtslauf: Der Filmstreifen muss nur einmal eingelegt werden; die Sequenz bei der Aufbelichtung der Matrixfelder ist zu ändern.
2) Index-Prints im Vorwärtslauf, Normalkopien im Rückwärtslauf: Auch hier ist der Filmstreifen nur einmal einzulegen; der Index-Print wird in aufsteigender Folge der Bildfelder belichtet.
3) Zunächst reiner Abtast-Durchlauf vorwärts, anschliessend Normalkopien im Rückwärtslauf, schliesslich IP-Kopien im Vorwärtslauf.
4) Abtasten vorwärts, Index-Prints rückwärts, Normalkopien vorwärts.

Die Abtastung aller Bildfelder im Abtast-Durchlauf ermöglicht einen Vergleich der verschiedenen Negativ-Datensätze und damit beispielsweise einen Ausgleich extremer Dichtesprünge oder die Beibehaltung der Farbabstimmung zwischen Sujets, die unter gleichartigen Bedingungen aufgenommen wurden; dies führt insgesamt zu einer Verbesserung der Bildqualität.

Als Sonderfall zur vorstehenden Variante 3) ist der Verzicht auf Normalkopien bzw. die Herstellung der Index-Prints unabhängig von der Herstellung der Normalkopien anzuführen, wobei die IP-Kopien wahlweise im Vorwärts- oder Rückwärtslauf des Filmstreifens erzeugt werden können. Diese Variante wird z.B. für die Erzeugung von Archivkopien (Proof Prints) eingesetzt. Die Auswahl der Normalkopien (vorzugsweise in einem Grossformat) wird dabei erst später aufgrund der Beurteilung der Proof-Prints getroffen, wobei dem Kopiervorgang auch ein separater Abtastvorgang der Negative zugrundegelegt werden kann, also nicht unbedingt auf die bei der Herstellung der Index-Prints ermittelten Abtastwerte zurück gegriffen werden muss. Bei den Proof-Prints sind meistens grössere Formate gefragt, und die einzelnen Bilder der Matrix sollten daher gegenüber dem Negativ leicht vergrössert sein. Ein Index-Print wird daher in diesem Anwendungsfall eine Matrix mit nur wenigen Elementen umfassen. Zu einem Filmstreifen werden deshalb in der Regel mehrere Index-Prints gehören. Selbstverständlich können die Index-Prints aber auch bei dieser Verfahrensvariante 1:1 oder in jedem beliebigen anderen Format abgebildet werden.

Besondere Verhältnisse liegen vor, wenn das erfindungsgemässe Verfahren zur Erzeugung von Index-Prints auf einem Produktionsprinter realisiert werden soll, der bekanntlich eine reine Belichtungsmaschine darstellt, ohne Film- und Papierentwicklung. Hier sind in der Regel eine Vielzahl von Filmen zu einem langen Band auf einer Filmrolle zusammengespleisst, die vom Printer im wesentlichen nur in einer Richtung transportiert werden können. Die Strategie kann darin bestehen, dass in einem ersten Durchgang alle Normalkopien der Negative auf der Filmrolle kopiert werden, wobei die Belichtungs- und filmspezifischen Daten jedes Negativs in der Auswerte- und Speichereinheit deponiert bleiben. Wenn es sich bei den verarbeiteten Filmen um solche des Formats 135 handelt, tritt dabei zur eindeutigen Kennzeichnung des Films an die Stelle der FID-Nummer die sogenannte Twin Check-Nummer, welche im wesentlichen nichts anderes darstellt als eine laborinterne fortlaufende Nummer für jeden eingespleissten Film (vgl. z.B. US-A-4,574,692). Aufgrund dieser Daten kann sodann in einem zweiten Durchlauf des Filmbandes zu jedem Film der entsprechende Index-Print erstellt werden. Auch hier kann die Herstellung der Index-Prints auch unabhängig von der Herstellung der Normalkopien erfolgen bzw. kann letztere entfallen, so dass also nur Index-Prints erzeugt werden. Der Herstellung der Normalkopien kann selbstverständlich auch hier ein separater Abtastvorgang zugrundegelegt werden.

Der Index-Print-Film muss nicht unbedingt in den Führungen des normalen Filmstreifens geführt werden. Es ist nämlich auch denkbar, Einzelnegative mit den entsprechenden Masken in einem flachen Rahmen zu fixieren, der ähnlich wie das IP-Objektiv auf einem Schlitten montiert ist und wie dieses mittels Schrittmotor quer zur Transportrichtung des Photopapiers in den Strahlengang hinein und aus diesem heraus bewegt werden kann. Idealerweise muss dabei das IP-Negativ in der Ebene der normalen Filmführung liegen und diese daher kreuzen. Wegen der grossen Tiefenschärfe des IP-Objektivs ist jedoch eine gewisse Abweichung aus konstruktiven Gründen zulässig.

Fig. 8 erläutert diese Lösung in schematischer Darstellung. Ein Trägerrahmen 91 weist Durchbrüche 92 auf, die durch aufgeklebte IP-Negative 93 abgedeckt sind. Der Trägerrahmen läuft auf einem Schienenpaar 94, mit dem er über Führungshülsen 95 verbunden ist. Er ist ebenfalls mit einem Zahnriemen 96 verbunden, der über ein Rollenpaar 97 a,b läuft und von einem Schrittmotor 98 angetrieben wird. Der Trägerrahmen kreuzt in seiner Betriebsstellung die Filmführung für den hier nicht vorhandenen Filmstreifen 13. Er hat eine Ruhestellung ausserhalb der Filmführung. Sie wird durch einen Endschalter 99 im Zusammenwirken mit einer Erhebung 100 am Trägerrahmen bestimmt. Das gewünschte IP-Negativ lässt sich durch Abzählen der Transportschritte aus dieser Ruhestellung positionieren.

Das Rahmenbild braucht nicht unbedingt als Vergrösserung ab einem Negativ projiziert zu werden. Es kann im Prinzip auch als Kontaktnegativ in natürlicher Grösse in einem Spannrahmen auf das Photopapier gelegt und durch das filmfreie Kopierfenster in der Filmbühne von der normalen Lichtquelle (Halogenlampe) durch das Projektionsobjektiv 33 ausgeleuchtet werden.

Bisher ist angenommen worden, dass mit der Aufbelichtung des Rahmenbildes für den Index-Print auch die Bildfeldnummern in die Elemente der Matrix einbelichtet werden. Dies ist nicht unbedingt notwendig. Vielmehr können die Bildfeldnummern, welche beim gebräuchlichen Filmformat 135 unterhalb jedes Negativs angeordnet sind, auch zusammen mit dem Bild optisch übertragen werden. Dabei wird allerdings bei starker Verkleinerung bald einmal die Grenze der Lesbarkeit erreicht. Ausserdem muss das Kopierfenster 29 in der Filmbühne einen Ausschnitt aufweisen, der die Bildnummer für die Projektion freigibt.

Die Bildfeldnummern können gewünschtenfalls auch wie variable Daten behandelt und den Datensätzen für die Negative entnommen werden. Weil sie über das ganze Bildfeld verteilt sind, sollten sie am besten von einem selbstleuchtenden oder beleuchtbaren Display, beispielsweise einer LCD-Matrix, einer LED-Matrix oder einer Kathodenstrahlröhre dargestellt und vorzugsweise über ein optisches System in die Filmebene nahe dem Vorlagefenster eingespiegelt werden. Durch kurzzeitiges Aktivieren bzw. Einschalten der Beleuchtung des Displays können dann diese Daten zusammen mit der Belichtung des Index-Prints über dasselbe Objektiv auf das Papier aufbelichtet werden. Gegebenenfalls können diese Daten auch von einer (relativ grossen und entsprechend teuren) LCD- oder LED-Matrix im Kontakt aufbelichtet werden. Bei gleicher Gelegenheit wären die übrigen veränderlichen Daten (FID-Nummer, Tagesdatum) zu übertragen.

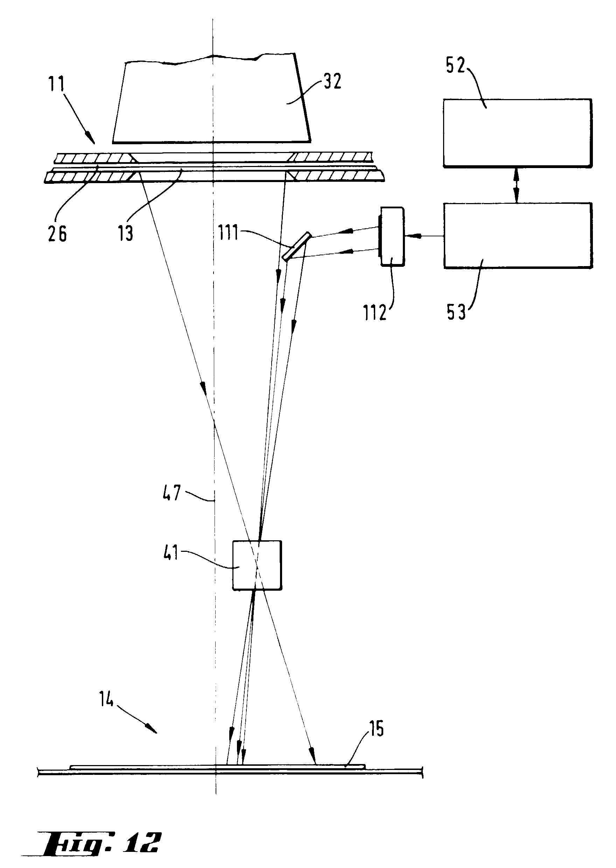

Fig. 12 zeigt, wie die Einblendung der Bildfeldnummern mittels eines selbstleuchtenden Displays realisiert sein kann. Relativ nahe der Transportebene des Filmstreifens 13 ist etwas ausserhalb des normalen Abbildungsstrahlengangs ein kleiner Umlenkspiegel 111 angeordnet, welcher das von einem selbstleuchtenden LCD-Display 112 kommende Licht auf das photographische Papier 15 umlenkt. Das Display 112 ist in an sich bekannter Weise an den Rechner 53 und den mit ihm verbundenen Speicher 52 angeschlossen und wird vom Rechner zur Darstellung der jeweils zugeordneten Bildfeldnummern angesteuert.

Fig. 9 zeigt eine Ausführungsvariante mit einer LCD-Matrix 101 und einem Schwenkspiegel 102. Weil das ganze Photopapier auszuleuchten ist, wird das Vergrösserungsobjektiv 33 zur Projektion verwendet.

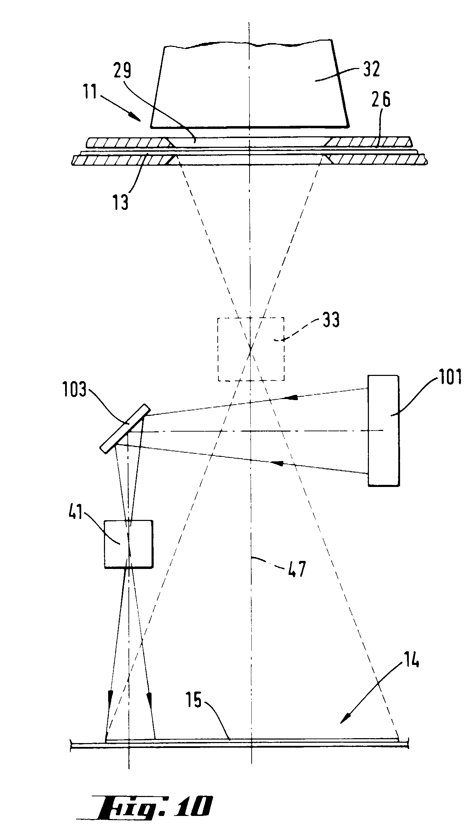

Fig. 10 stellt die Situation dar, wo nur die variable Information in die Randzone des Index-Prints einzubelichten ist. In diesem Fall lässt sich die LCD-Matrix 101 analog der Ausführungsform gemäss Fig. 12 über einen festen Spiegel 103 ausserhalb des Bereiches der Bildstrahlen und über das IP-Objektiv 41 verkleinert abbilden.

Im beschriebenen Ausführungsbeispiel ist die sukzessive Belichtung der Index-Print-Matrix durch die koordinierte Verschiebung von IP-Objektiv und Photopapier bewirkt. Statt dessen könnte auch das IP-Objektiv für sich allein den Bereich der ganzen Matrix belichten, wenn es auf einem Kreuzschlitten montiert wäre. Die weiteren Möglichkeiten, entweder die Filmbühne oder die Papierbühne eine Bewegung in beiden Achsrichtungen ausführen zu lassen, sind prinzipiell machbar aber weniger praktikabel.

In diesem Zusammenhang könnten als Alternative zur vorgeschlagenen Lösung mit der Numerierung der Bildfelder in der Matrix zeilenweise von links nach rechts und von oben nach unten auch zunächst die erste Spalte von oben nach unten und dann analog die weiteren Spalten sukzessive von links nach rechts numeriert werden. Die Auswirkung wären weniger Bewegungen des Papiertransports, dafür vermehrte Bewegungen des IP-Objektivs. Der Kunde hätte sich mit einer eher ungewohnten Darstellungsweise anzufreunden.

Wegen der wiederholten Belichtungen auf dasselbe Blatt Photopapier bei Index-Prints ist dieses wesentlich länger als bei Normalprints dem Streulicht der Umgebung ausgesetzt. Um schädliche Auswirkungen auf die Qualität der Index-Prints zu vermeiden, sind u.U. Schutzmassnahmen gegen Streulichteinflüsse notwendig.

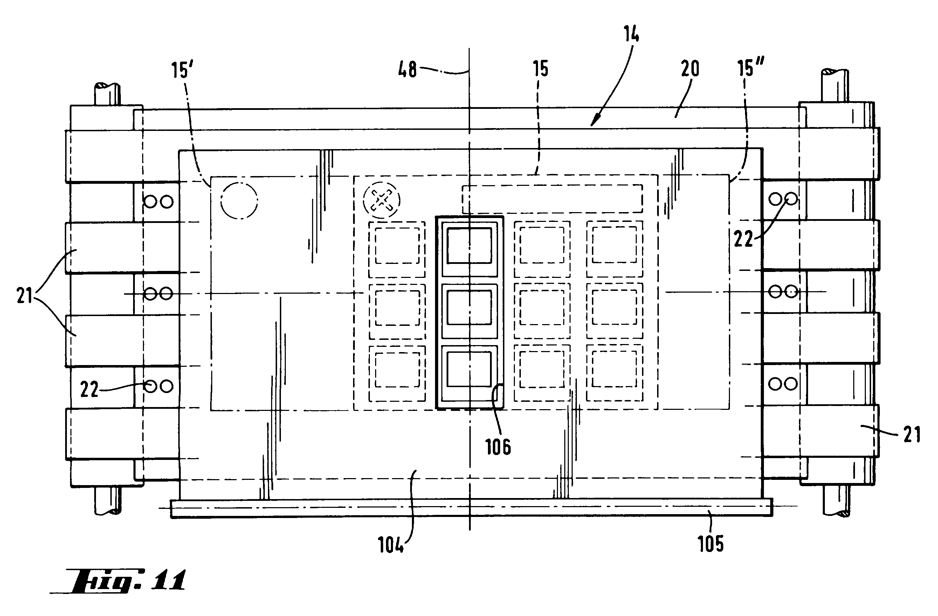

Fig. 11 zeigt eine Lösungsmöglichkeit, die zum bisher beschriebenen Ausführungsbeispiel passt. Auf der Papierbühne 14 mit Vakuumkasten 20 und Transportbändern 21 liegt das Photopapier 15 in einer Position für das Aufbelichten der Bilder in den Matrix-Elementen. Alle Belichtungen erfolgen mit dem IP-Objektiv in der Ebene 48. Das Photopapier wird dabei zwischen den Extremlagen 15' und 15" hin und her bewegt. Eine Abdeckung 104, die um eine Welle 105 in eine Lage wenig über dem Photopapier einschwenkbar ist und in der zentralen Partie eine schlitzförmige Ausnehmung 106 aufweist, verwehrt dem Streulicht aus dem Raum oberhalb der Papierbühne den Zutritt zum Photopapier. Die Abdeckung nimmt eine Ruhelage ausserhalb des Projektionsstrahlenganges ein, wenn keine Bilder der IP-Matrix zu belichten sind.

Das erfindungsgemässe Verfahren ist grundsätzlich auch dazu geeignet, Index-Prints zu gerahmten Diapositiven anzufertigen. Natürlich erfordert die Verarbeitung solcher Dias spezielle Dia-Printer bzw. Printer mit Dia-Adaptern. Solche Printer sind an sich bekannt und bedürfen daher keiner näheren Erläuterung. Index-Prints auf dieser Basis können zu Dokumentationszwecken, etwa für einen Vortrag, nützlich sein. Sie erweisen sich auch als Sicherheitswerkzeuge wertvoll, um beispielsweise rasch wieder Ordnung herzustellen, falls die Diapositive im Magazin eines Projektors durch einen Betriebsunfall durcheinander geraten sein sollten.

Für die Zukunft sind neue Filmgenerationen mit magnetischer Beschichtung zu erwarten. Filmspezifische Informationen, die bei den aktuellen Produkten in Form von Barcodes auf den Filmen vorhanden sind, werden dabei zusätzlich oder als Alternative magnetisch aufgezeichnet sein. Die Erfindung wird diese Informationen ebenso mit Vorteil verwenden können wie weitere, beispielsweise kameraspezifische oder benutzerspezifische Daten.

Wie schon weiter vorne erwähnt, ist die Erfindung nicht auf das Aufbringen von Bildfeldnummern und speziell von vom Filmstreifen abgelesenen oder sonstwie übertragenen Bildfeldnummern als individuelle Bildfeldinformationen beschränkt. Vielmehr können als individuelle Bildfeldinformationen auch andere individuelle, bildbezogene Bildfeldidentifikationsdaten herangezogen werden. Beispielsweise können solche Bildidentifikationsdaten, wenn keine entsprechenden Daten auf dem Filmstreifen bzw. der Kopiervorlage vorhanden sind, während der Herstellung des Index-Prints im Rechner erzeugt oder fest vorgegeben sein. In letzterem Falle können diese Bildfeldidentifikationsdaten auch Bestandteil der festen Information des Rahmenbilds sein. Neben Nummern können diese Bildidentifikationsdaten auch andere bildfeldbezogene Informationen z.B. in Form von alphanumerischen Zeichen oder anderen Symbolen enthalten. Die Art der Bildfeldidentifikationsdaten kann sich auch nach eventuell auf dem Filmstreifen oder der entsprechenden Kopiervorlage vorhandenen und von diesem abgelesenen bildfeldbezogenen Informationen richten.

Die mannigfachen Vorteile der Erfindung sind offensichtlich:
- Index-Prints ermöglichen eine Uebersicht über den ganzen Auftrag ohne physische Konsultation der Negative, die somit geschützt bleiben.
- Die Bilder des Index-Prints sind individuell korrigiert und stimmen in dieser Beziehung mit den Normalabzügen überein.
- Die Bilder des Index-Prints weisen photographische Qualität auf. Ihre Auflösung ist nicht durch digitale Rasterung beeinträchtigt.
- Die Zuordnung der Index-Print-Bilder zu den Negativen auf dem Filmstreifen ist durch die Bildfeldnummern gewährleistet.
- Jeder Index-Print kann über die FID- oder Twin Check-Nummer eindeutig einem bestimmten Film zugeordnet werden.
- Index-Prints können durch entsprechende Gestaltung des Rahmenbildes auch als Werbeträger eingesetzt werden.
- Gerätemässig bleibt der Aufwand in Grenzen, weil vorhandene Baugruppen für die Erzeugung der Index-Prints mitbenützt werden können.

## Patentansprüche

1. Verfahren zur Erzeugung von Index-Prints auf einem photographischen Printer, bei dem eine vorbestimmte Anzahl aufeinanderfolgender photographischen Vorlagen auf einem Filmstreifen (13) hinsichtlich ihrer Dichtewerte in den drei Grundfarben und ggf. ihrer Bildfeldnummern (8) sowie eventueller weiterer, filmbezogener Daten vorzugsweise punktweise photoelektrisch abgetastet, die ermittelten Dichte-Abtastwerte in Printersteuerungswerte umgesetzt und diese Printersteuerungswerte und die übrigen Abtastwerte vorzugsweise abgespeichert und zum Aufbau eines aus Aufsichtsbildern zusammengesetzten Index-Prints (2) herangezogen werden, dessen Einzelbilder (7) in Form einer zweidimensionalen Elemente-Matrix mit Spaltenelementen und Zeilenelementen gruppiert sind, dadurch gekennzeichnet, dass die Einzelbilder (7) der Matrix rein photographisch direkt von den Vorlagen auf dem Filmstreifen (13) der Reihe nach belichtet werden, wobei die erforderlichen Belichtungsdaten aus den vorzugsweise abgespeicherten Printersteuerungswerten hergeleitet werden und die Einzelbilder des Index-Prints (2) mit individuellen Bildfeldinformationen (8) versehen werden.

2. Verfahren nach Anspruch 1, dadurch gekennzeichnet, dass Index-Prints (2) unabhängig von normalen einzelnen Prints erzeugt werden, wobei die Vorlagen auf dem Filmstreifen (13) der Reihe nach abgetastet, die Abtastdaten ausgewertet und direkt als Belichtungswerte zur Uebertragung der einzelnen Vorlagen auf den Index-Print (2) verwendet werden.

3. Verfahren nach Anspruch 1, dadurch gekennzeichnet, dass Index-Prints (2) als Ergänzung zu normalen einzelnen Prints von den Vorlagen des Filmstreifens (13) erzeugt werden.

4. Verfahren nach Anspruch 3, dadurch gekennzeichnet, dass die normalen einzelnen Prints zuerst erzeugt und die Abtastwerte jeder Vorlage einerseits unmittelbar für die Erzeugung der einzelnen Prints dieser Vorlage ausgewertet und andererseits zur späteren Verwendung für den Index-Print (2) abgespeichert werden, und dass die Vorlagen auf dem Filmstreifen (13) mittels eines speziellen Index-Print-Objektivs (41) in gegenüber den normalen Prints reduziertem Massstab auf dem Index-Print (2) abgebildet werden.

5. Verfahren nach Anspruch 4, dadurch gekennzeichnet, dass die normalen Prints während einer Vorwärtsbewegung des Filmstreifens (13) und der Index-Print (2) während einer Rückwärtsbewegung des Filmstreifens (13) erzeugt werden.

6. Verfahren nach Anspruch 3, dadurch gekennzeichnet, dass während einer Vorwärtsbewegung des Filmstreifens (13) die Abtastung der Vorlagen und die Belichtung des Index-Prints (2) erfolgen, während die normalen Prints während einer Rückwärtsbewegung des Filmstreifens (13) erzeugt werden.

7. Verfahren nach Anspruch 3, dadurch gekennzeichnet, dass während einer ersten Vorwärtsbewegung des Filmstreifens (13) die Abtastung der Vorlagen erfolgt, dass während einer Rückwärtsbewegung des Filmstreifens (13) die normalen Prints oder der Index-Print (2) erzeugt werden und dass während einer zweiten Vorwärtsbewegung des Filmstreifens (13) der Index-Print (2) bzw. die normalen Prints erzeugt werden.

8. Verfahren nach einem der vorangehenden Ansprüche, dadurch gekennzeichnet, dass zur schrittweisen Belichtung des Index-Prints (2) mit den Vorlagen des Filmstreifens (13) die Zentren der Spaltenelemente mit einer senkrecht zur Transportrichtung des Photopapiers (15) und durch die optische Achse (47) des abbildenden Objektivs (41) verlaufenden Ebene zur Deckung gebracht werden, indem das Photopapier (15) mittels des vorhandenen Papiertransportsystems (18-25) entsprechend vorgeschoben wird, während die Zentren der Zeilenelemente durch Verschiebung des abbildenden Objektivs (41) in der erwähnten Ebene stufenweise angesteuert werden.

9. Verfahren nach einem der Ansprüche 1-8, dadurch gekennzeichnet, dass zur schrittweisen Belichtung des Index-Frints (2) mit den Vorlagen des Filmstreifens (13) bei feststehendem Photopapier (15) die Zentren der Spaltenelemente und der Zeilenelemente durch stufenweise Verschiebungen des abbildenden Objektivs (41) in Richtung parallel und quer zur Transportrichtung des Photopapiers (15) angesteuert werden.

10. Verfahren nach einem der vorangehenden Ansprüche, dadurch gekennzeichnet, dass zur Reduktion störender Streulichteinflüsse während der Belichtung der einzelnen Matrixelemente (7) des Index-Prints (2) mindestens ein Teil der übrigen Matrix elemente gegen Lichteinfall geschützt wird.

11. Verfahren nach einem der vorangehenden Ansprüche, dadurch gekennzeichnet, dass die Index-Prints (2) aus drei verschachtelten Teilfeldern (3-8) aufgebaut sind, nämlich einem Rahmenbild (3) mit fixen, vorausbestimmten Text- und/oder Graphik-Informationen, einem Datenfeld (5) mit variablen Text-Informationen und einer Felder-Matrix (7) mit den Abbildungen der Vorlagen, wobei das Rahmenbild (3) ausgesparte Flächen (6) für das Datenfeld (5) und die Felder-Matrix (7) mit den zugehörigen Bildfeldinformationen (8) aufweist.

12. Verfahren nach Anspruch 11, dadurch gekennzeichnet, dass das Rahmenbild (3) durch photographische Projektion einer Rahmenvorlage (61-63) erzeugt wird, die Teil eines separaten Index-Print-Filmstreifens (60) ist.

13. Verfahren nach Anspruch 12, dadurch gekennzeichnet, dass der Index-Print-Filmstreifen (60) mehrere Rahmenvorlagen (61-63) enthält, die sich in der Anzahl der Matrix-Elemente und/oder der graphischen Gestaltung unterscheiden, und wobei sich die Auswahl der jeweils verwendeten Rahmenvorlage (61-63) nach den Eigenschaften des verarbeiteten Filmstreifens (13) richtet.

14. Verfahren nach einem der Ansprüche 11-13, dadurch gekennzeichnet, dass die Rahmenvorlagen (61-63) die Bildfeldinformationen (8) als fix vorausbestimmte Text- und/oder Graphikinformationen enthält.

15. Verfahren nach einem der Ansprüche 11-14, dadurch gekennzeichnet, dass zur photographischen Uebertragung der Rahmenvorlage (61-63) dasselbe Projektionssystem (30) wie für die normalen Kopiervorgänge des Printers verwendet wird.

16. Verfahren nach einem der Ansprüche 11-15, dadurch gekennzeichnet, dass die variablen Daten durch Kontaktbelichtung oder durch optische Projektion einer selbstleuchtenden oder beleuchtbaren digitalen Anzeigeeinheit (82; 112) auf das Photopapier (15) übertragen werden.

17. Verfahren nach einem der vorangehenden Ansprüche, dadurch gekennzeichnet, dass der bearbeitete Filmstreifen (13) ein Negativstreifen ist.

18. Verfahren nach einem der Ansprüche 1-17, dadurch gekennzeichnet, dass der verwendete Filmstreifen (13) ein Umkehrfilmstreifen ist.

19. Verfahren nach Anspruch 18, dadurch gekennzeichnet, dass anstelle eines Umkehrfilmstreifens einzelne gerahmte Diapositive verarbeitet werden.

20. Verfahren nach einem der vorangehenden Ansprüche, dadurch gekennzeichnet, dass die einzelnen Bilder (7) auf dem Index-Print (2) dem Original entsprechend aufrecht und seitenrichtig dargestellt werden.

21. Verfahren nach einem der vorangehenden Ansprüche, dadurch gekennzeichnet, dass die einzelnen Bilder (7) des Index-Prints (2) hinsichtlich Dichte und Farbe individuell korrigiert sind.

22. Verfahren nach einem der Ansprüche 3-21, dadurch gekennzeichnet, dass die für die Herstellung der einzelnen Bilder (7) des Index-Prints (2) verwendeten Korrekturen mit jenen übereinstimmen, die auch für die Erzeugung der normalen Prints verwendet werden.

23. Verfahren nach einem der vorangehenden Ansprüche, dadurch gekennzeichnet, dass die individuellen Korrekturen eines Bildes teilweise durch Verknüpfung der zugehörigen Daten mit den abgespeicherten Daten anderer Vorlagen auf dem Filmstreifen gewonnen werden.

24. Verfahren nach einem der Ansprüche 11-23, dadurch gekennzeichnet, dass die Text- und Graphikinformationen den Namen des Verarbeitungslabors, allenfalls einen Werbetext und/oder ein Firmenlogo enthalten.

25. Verfahren nach einem der Ansprüche 11-24, dadurch gekennzeichnet, dass die variablen Daten eine Filmidentifikationsnummer und/oder das Tagesdatum enthalten.

26. Verfahren nach einem der Ansprüche 11-25, dadurch gekennzeichnet, dass die variablen Daten eine laborinterne Verarbeitungsnummer (Twin Check-Nummer) und/oder das Tagesdatum enthalten.

27. Verfahren nach einem der vorangehenden Ansprüche, dadurch gekennzeichnet, dass als individuelle Bildfeldinformationen die auf dem Filmstreifen (13) vorhandenen und von diesem abgetasteten und gespeicherten Bildfeldnummern (8) auf den Index-Print (2) aufgebracht werden.

28. Verfahren nach einem der Ansprüche 1-26, dadurch gekennzeichnet, dass als individuelle Bildfeldinformationen individuell erzeugte oder fest vorgegebene Bildfeldidentifikationsdaten auf den Index-Print (2) aufgebracht werden.

29. Verfahren nach Anspruch 2, dadurch gekennzeichnet, dass die Bilder (7) auf dem Index-Print (2) gegenüber der Vorlage in leichter Vergrösserung wiedergegeben werden, so dass sich der Index-Print (2) als Archivkopie (Proof Print) verwenden lässt.

30. Vorrichtung zur Erzeugung von Index-Prints mit einem photographischen Printer, der in einem lichtdichten Gehäuse (10) eine Lichtquelle (31), eine Filmbühne (11) zur Aufnahme und zum Transport eines Vorlage-Filmstreifens (13), eine Papierbühne (14) für die Positionierung und den Transport von photographischem Papier (15), ein Projektionsobjektiv (33) zum Abbilden von auf dem Vorlage-Filmstreifen (13) befindlichen Kopiervorlagen auf das photographische Papier (15) und eine Abtaststation (12) für die vorzugsweise punktweise Abtastung der Bildfläche der Kopiervorlagen und von ggf. auf dem Vorlage-Filmstreifen (13) vorhandenen Bildfeldinformationen, insbesondere Bildfeldnummern (8) und eventuellen weiteren Daten enthält und welcher ferner einen Rechner (53) umfasst, der aus den von der Abtaststation (12) ermittelten Abtastwerten Belichtungssteuerungswerte ermittelt, Abtastwerte und/oder daraus ermittelte Werte in einer Speichereinheit (52) speichert und die Funktionsabläufe des Printers koordiniert und steuert, dadurch gekennzeichnet, dass der Printer zusätzlich mit einem Index-Print-Objektiv (41) ausgestattet ist, welches alternativ zum Projektionsobjektiv (33) in den Abbildungsstrahlengang (47) einbringbar ist und welches durch den Rechner (53) gesteuert wenigstens in einer Dimension so beweglich angeordnet ist, dass es eine Anzahl von einzelnen Kopiervorlagen des Vorlage-Filmstreifens (13) als Index-Print (2) in einer matrix-förmigen Anordnung auf das photographische Papier (15) abbildet, und dass der Printer ferner mit Aufbelichtungsmitteln (111,112) versehen ist, welche die ggf. vom Vorlage-Filmstreifen (13) abgetasteten oder individuell erzeugten oder fest vorgegebenen individuellen Bildfeldinformationen (8) in räumlicher Zuordnung zu den Abbildungen (7) der einzelnen Kopiervorlagen des Index-Prints (2) auf das photographische Papier (15) aufbelichten.

31. Vorrichtung nach Anspruch 29, dadurch gekennzeichnet, dass das Index-Print-Objektiv (41) stufenweise quer zur Transportrichtung des photographischen Papiers (15) beweglich ist.

32. Vorrichtung nach Anspruch 30, dadurch gekennzeichnet, dass das Index-Print-Objektiv (41) stufenweise parallel zur Transportrichtung des photographischen Papiers (15) beweglich ist.

33. Vorrichtung nach einem der Ansprüche 29-31, dadurch gekennzeichnet, dass die Aufbelichtungsmittel (111,112) eine vom Rechner (53) angesteuerte selbstleuchtende oder beleuchtbare digitale Anzeigeeinheit (112) umfassen.

34. Vorrichtung nach einem der Ansprüche 29-32, dadurch gekennzeichnet, dass der Printer Rahmenprojektionsmittel (31,33,60-70) zur Aufbelichtung eines Rahmenbilds (3) auf das photographische Papier (15) umfasst.

35. Vorrichtung nach Anspruch 33, dadurch gekennzeichnet, dass die Rahmenprojektionsmittel (31,33,60-70) einen Index-Print-Filmstreifen (60) mit wenigstens einer Rahmenbild-Vorlage (61-63) umfassen, und dass vom Rechner (53) angesteuerte Transportmittel (66-70) vorgesehen sind, welche den Index-Print-Filmstreifen (60) in den Abbildungsstrahlengang (47) des Projektionsobjektivs (33) einführen und wieder aus diesem entfernen.

36. Vorrichtung nach einem der Ansprüche 29-34, dadurch gekennzeichnet, dass der Printer Streulichtabschirmungsmittel (104-106)) umfasst, welche während der Aufbelichtung der einzelnen Bilder (7) des Index-Prints (2) Streulicht von den bereits aufbelichteten Bildern abschirmt.

## Claims

1. Process for generating index prints on a photographic printer, in which a specified number of sequential photographic originals on a film strip (13) are scanned, preferably photoelectrically point by point, with respect to their density figures in the three basic colours and, if appropriate, their image field numbers (8) and possibly further data relating to the film, in which the density scanning figures determined are converted into printer control figures and these printer control figures and the other scanning figures are preferably stored and are used to build up an index print (2), which is composed of inspection images and whose individual images (7) are grouped in the form of a two-dimensional element matrix with column elements and line elements, characterised in that the individual images (7) of the matrix are exposed, purely photographically, directly from the originals on the film strip (13) in sequence, the necessary exposure data being derived from the preferably stored printer control figures and the individual images of the index print (2) are provided with individual image field information (8).

2. Process according to Claim 1, characterised in that index prints (2) are generated independently of normal individual prints, the originals on the film strip (13) being scanned in sequence, the scanning data being evaluated and used directly as exposure figures for transferring the individual originals onto the index print (2).

3. Process according to Claim 1, characterised in that index prints (2) are generated from the originals on the film strip (13) as a supplement to normal prints.

4. Process according to Claim 3, characterised in that the normal individual prints are generated first and the scanning figures for each original are, on the one hand, evaluated directly for the generation of the individual prints from this original and, on the other hand, are stored for later use for the index print (2), and in that the originals on the film strip (13) are imaged by means of a special index print objective (41) onto the index print (2) in a scale which is reduced relative to that of the normal prints.

5. Process according to Claim 4, characterised in that the normal prints are generated during a forward motion of the film strip (13) and the index print (2) is generated during a reverse motion of the film strip (13).

6. Process according to Claim 3, characterised in that the scanning of the originals and the exposure of the index prints (2) takes place during a forward motion of the film strip (13), whereas the normal prints are generated during a reverse motion of the film strip (13).

7. Process according to Claim 3, characterised in that the scanning of the originals takes place during a first forward motion of the film strip (13), in that the normal prints or the index prints (2) are generated during a reverse motion of the film strip (13) and in that the index print (2) or the normal prints are generated during a second forward motion of the fi!m strip (13).

8. Process according to one of the preceding claims, characterised in that for the stepwise exposure of the index prints (2).by the originals from the film strip (13), the centres of the common elements are brought into coincidence with a plane extending at right angles to the transport direction of the photographic paper (15) and through the optical axis (47) of the imaging objective (41), the photographic paper (15) being correspondingly advanced by means of the existing paper transport system (18-25), while the centres of the line elements are actuated in steps by displacement of the imaging objective (41) in the plane mentioned.

9. Process according to one of Claims 1 to 8, characterised in that for the stepwise exposure of the index prints (2) by the originals on the film strip (13), with the photographic paper (15) at rest, the centres of the column elements and the line elements are actuated by stepwise displacement of the imaging objective (41) in the direction parallel to and transverse to the transport direction of the photographic paper (15).

10. Process according to one of the preceding claims, characterised in that in order to reduce interference scatter light effects during the exposure of the individual matrix elements (7) of the index print (2), at least a part of the remaining matrix elements are protected from the arrival of light.

11. Process according to one of the preceding claims, characterised in that the index prints (2) are built up of three interlaced partial fields (3-8), namely a frame image (3) with permanent, specified texts and/or graphics information, a data field (5) with variable text information and a fields matrix (7) with the images of the originals, the frame image (3) having reserved areas (6) for the data field (5) and the fields matrix (7) with the associated image field information (8).

12. Process according to Claim 11, characterised in that the frame image (3) is generated by photographic projection of a frame original (61-63) which is part of a separate index print film strip (60).

13. Process according to Claim 12, characterised in that the index print film strip (60) contains a plurality of frame originals (61-63) which differ in the number of matrix elements and/or of the graphical design, and the selection of the respectively used frame original (61-63) being based on the properties of the processed film strip (13).

14. Process according to one of Claims 11 to 13, characterised in that the frame original (61-63) contains the image field information (8) as permanently specified text and/or graphics information.

15. Process according to one of Claims 11 to 14, characterised in that the same projection system (30) as that employed for the normal copying procedures of the printer is used for the photographic transmission of the frame original (61-63).

16. Process according to one of Claims 11 to 15, characterised in that the variable data are transmitted to the photographic paper (15) by contact exposure or by optical projection of a self-illuminating digital display unit (82; 112), or one which can be illuminated.

17. Process according to one of the preceding claims, characterised in that the processed film strip (13) is a negative strip.

18. Process according to one of Claims 1 to 17, characterised in that the film strip (13) used is a reverse film strip.

19. Process according to Claim 18, characterised in that individual framed diapositives can be processed instead of a reverse film strip.

20. Process according to one of the preceding claims, characterised in that the individual images (7) on the index print (2) are represented in portrait or landscape format to correspond with the original.

21. Process according to one of the preceding claims, characterised in that the individual images (7) of the index print (2) are corrected individually with respect to density and colour.

22. Process according to one of Claims 3 to 21, characterised in that the corrections used for the manufacture of the individual images (7) of the index print (2) agree with those which are also used for the generation of the normal prints.

23. Process according to one of the preceding claims, characterised in that the individual corrections to an image are obtained in part by combining the data associated with the stored data for other originals on the film strip.

24. Process according to one of Claims 11 to 23, characterised in that the text and graphics information contains the name of the processing laboratory, possibly an advertisement text and/or a company logo.

25. Process according to one of Claims 11 to 24, characterised in that the variable data contain a film identification number and/or the date.

26. Process according to one of Claims 11 to 25, characterised in that the variable data contain a processing number internal to the laboratory (twin check number) and/or the date.

27. Process according to one of the preceding claims, characterised in that the image field numbers (8) present on the film strip (13) and scanned and stored from the latter are applied to the index print (2) as the individual image field information.

28. Process according to one of Claims 1 to 26, characterised in that individually generated or permanently specified image field identification data are applied to the index print (2) as the individual image field information.

29. Process according to Claim 2, characterised in that the images (7) on the index print (2) are reproduced with a slight enlargement relative to the original so that the index print (2) can be used as an archive copy (proof print).

30. Appliance for generating index prints with a photographic printer, which contains, in a light-proof casing (10), a light source (31), a film platform (11) for accommodating and transporting an original film strip (13), a paper platform (14) for the positioning and the transport of photographic paper (15), a projection objective (33) for imaging copying originals located on the original film strip (13) onto the photographic paper (15) and a scanning station (12) for the preferably point by point scanning of the image area of the copying original and, if appropriate, of image field information present on the original film strip (13), in particular image field numbers (8) and possibly further data, and which comprises, furthermore, a computer (53) which determines exposure control figures from the scanning figures determined by the scanning station (12), which stores scanning figures and/or figures determined from them in a memory unit (52) and which co-ordinates and controls the functional procedures of the printer, characterised in that the printer is additionally equipped with an index print objective (41) which, as an alternative to the projection objective (33), can be brought into the imaging beam path (47) and which is arranged to be movable at least in one dimension, controlled by the computer (53), in such a way that it images a number of individual copying originals from the original film strip (13) as an index print (2) in a matrix-shaped arrangement on the photographic paper (15), and in that the printer is, furthermore, provided with exposure means (111, 112), which expose the individual image field information (8), possibly scanned from the original film strip (13) or individually generated or permanently specified in spatial arrangement, relating to the images (7) of the individual copying originals of the index print (2) onto the photographic paper (15).

31. Appliance according to Claim 29, characterised in that the index print objective (41) can be moved in steps transverse to the transport direction of the photographic paper (15).

32. Appliance according to Claim 30, characterised in that the index print objective (41) can be moved in steps parallel to the transport direction of the photographic paper (15).

33. Appliance according to one of Claims 29 to 31, characterised in that the exposure means (111, 112) comprise a self-illuminating digital display unit (112), or one which can be illuminated, controlled by the computer (53).

34. Appliance according to one of Claims 29 to 32, characterised in that the printer comprises frame projection means (31, 33, 60-70) for exposing a frame image (3) onto the photographic paper (15).

35. Appliance according to Claim 33, characterised in that the frame projection means (31, 33, 60-70) comprise an index print film strip (60) with at least one frame image original (61-63), and in that transport means (66-70) are provided which are controlled by the computer (83) and which introduce the index print film strip (30) into the imaging beam path (47) of the projection objective (33) and remove it again from the latter.

36. Appliance according to one of Claims 29-34, characterised in that the printer comprises scatter light screening means (104-106) which screen the already exposed images from scatter light during the exposure of the individual images (7) of the index print (2).

## Revendications

1. Procédé pour produire des photo-index sur une tireuse photographique, dans lequel un nombre prédéterminé d'originaux photographiques successifs sur une bande de film (13) sont soumis à une analyse photoélectrique, de préférence point par point, pour connaître leurs valeurs de densité dans les trois couleurs de base et, le cas échéant, leurs numéros de vues (8) ainsi que d'éventuelles données complémentaires relatives au film, les valeurs d'analyse d'intensité obtenues sont converties en valeurs de commande de tireuse, et ces valeurs de commande de tireuse et les autres valeurs d'analyse sont de préférence mémorisées et utilisées pour confectionner un photo-index (2) qui est constitué d'images opaques et dont les images individuelles (7) sont groupées sous la forme d'une matrice bidimensionnelle à éléments avec des éléments de colonnes et des éléments de lignes, caractérisé en ce que les images individuelles (7) de la matrice sont insolées les unes à la suite des autres, par voie purement photographique, directement à partir des originaux sur la bande de film (13), les données d'insolation nécessaires étant dérivées des valeurs de commande de tireuse de préférence mémorisées, et les images individuelles du photo-index (2) étant pourvues d'informations de vues individuelles (8).

2. Procédé selon la revendication 1, caractérisé en ce que des photo-index (2) sont produits indépendamment de tirages individuels normaux, les originaux sur la bande de film (13) étant analysés les uns à la suite des autres, les données d'analyse étant évaluées et utilisées directement comme valeurs d'insolation pour le transfert des originaux individuels sur le photo-index (2).

3. Procédé selon la revendication 1, caractérisé en ce que des photo-index (2) sont produits en complément de tirages individuels normaux à partir des originaux de la bande de film (13).

4. Procédé selon la revendication 3, caractérisé en ce que les tirages individuels normaux sont d'abord produits et les valeurs d'analyse de chaque original sont, d'une part, évaluées directement pour la production des tirages individuels dudit original et, d'autre part, mémorisées en vue d'un emploi extérieur pour le photo-index (2), et en ce que les originaux sur la bande de film (13) sont reproduits sur le photo-index (2) au moyen d'un objectif à photo-index spécial (41) à une échelle réduite par rapport aux tirages normaux.

5. Procédé selon la revendication 4, caractérisé en ce que les tirages normaux sont produits durant un mouvement d'avance de la bande de film (13) et le photo-index (2) l'est durant un mouvement de recul de la bande de film (13).

6. Procédé selon la revendication 3, caractérisé en ce que durant un mouvement d'avance de la bande de film (13) ont lieu l'analyse des originaux et l'insolation du photo-index (2), tandis que les tirages normaux sont produits durant un mouvement de recul de la bande de film (13).

7. Procédé selon la revendication 3, caractérisé en ce que durant un premier mouvement d'avance de la bande de film (13) a lieu l'analyse des originaux, en ce que durant un mouvement de recul de la bande de film (13) sont produits les tirages normaux ou le photo-index (2), et en ce que durant un second mouvement d'avance de la bande de film (13) sont produits le photo-index (2) ou, selon le cas, les tirages normaux.

8. Procédé selon une des revendications précédentes, caractérisé en ce que, pour insoler pas à pas le photo-index (2) avec les originaux de la bande de film (13), les centres des éléments de colonnes sont amenés en coïncidence avec un plan s'étendant perpendiculairement à la direction de transport du papier photographique (15) et passant par l'axe optique (47) de l'objectif de reproduction (41), le papier photographique (15) étant, à cet effet, avancé en conséquence au moyen du système existant de transport de papier (18 à 25), tandis que les centres des éléments de lignes sont cadrés graduellement dans le plan cité par déplacement de l'objectif de reproduction (41).

9. Procédé selon l'une des revendications 1 à 8, caractérisé en ce que, pour insoler pas à pas le photo-index (2) avec les originaux de la bande de film (13) avec un papier photographique immobile (15), les centres des éléments de colonnes et des éléments de lignes sont cadrés par des déplacements graduels de l'objectif de reproduction (41) dans des directions parallèle et transversale à la direction de transport du papier photographique (15).

10. Procédé selon une des revendications précédentes, caractérisé en ce que, pour réduire les influences de la lumière diffusée préjudiciables à la réduction, durant l'insolation des éléments individuels de matrice (7) du photo-index (2), au moins une partie des éléments de matrice restants sont protégés contre les incidences lumineuses.

11. Procédé selon une des revendications précédentes, caractérisé en ce que les photo-index (2) sont confectionnés à partir de trois zones partielles emboîtées (3 à 8), à savoir d'une image de cadre (3) avec des informations textuelles et/ou graphiques fixes prédéterminées, d'une zone de données (5) avec des informations textuelles variables, et d'une matrice à zones (7) avec les reproductions des originaux, l'image de cadre (3) comportant des réserves (6) pour la zone de données (5) et la matrice à zones (7) avec les informations de vues correspondantes (8).

12. Procédé selon la revendication 11, caractérisé en ce que l'image de cadre (3) est produite par projection photographique d'un modèle de cadre (61 à 63) qui fait partie d'une bande de film à photo-index séparée (60).

13. Procédé selon la revendication 12, caractérisé en ce que la bande de film à photo-index (60) comporte plusieurs modèles de cadres (61 à 63; qui se différencient par le nombre de leurs éléments de matrice et/ou par leur configuration graphique, et le choix du modèle de cadre employé (61 à 63) étant dicté par les caractéristiques de la bande de film traitée (13).

14. Procédé selon l'une des revendications 11 à 13, caractérisé en ce que les modèles de cadres (61 à 63) contiennent les informations de vues (8) sous forme d'informations textuelles et/ou graphiques fixes prédéterminées.

15. Procédé selon l'une des revendications 11 à 14, caractérisé en ce que, pour le transfert photographique du modèle de cadre (61 à 63), le même système de projection (30) que pour les processus de tirage normaux de la tireuse est utilisé.

16. Procédé selon l'une des revendications 11 à 15, caractérisé en ce que les données variables sont transférées sur le papier photographique (15) par insolation par contact ou par projection optique d'une unité d'affichage numérique luminescente ou éclairée (82 ; 112).

17. Procédé selon une des revendications précédentes, caractérisé en ce que la bande de film traitée (13) est une bande de négatif.

18. Procédé selon l'une des revendications 1 à 17, caractérisé en ce que la bande de film utilisée (13) est une bande de film inversible.

19. Procédé selon la revendication 18, caractérisé en ce qu'au lieu d'une bande de film inversible des diapositives individuelles encadrées sont traitées.

20. Procédé selon une des revendications précédentes, caractérisé en ce que, sur le photo-index (2), les images individuelles (7) sont reportées debout et à l'endroit conformément à l'original.

21. Procédé selon une des revendications précédentes, caractérisé en ce que les images individuelles (7) du photo-index (2) sont corrigées individuellement sur le plan de la densité et de la couleur.

22. Procédé selon l'une des revendications 3 à 21, caractérisé en ce que les corrections apportées pour la réalisation des images individuelles (7) du photo-index (2) coïncident avec celles qui sont apportées aussi pour la production des tirages normaux.

23. Procédé selon une des revendications précédentes, caractérisé en ce que les corrections individuelles d'une image sont obtenues en partie par combinaison des données correspondantes avec les données mémorisées d'autres originaux sur la bande de film.

24. Procédé selon l'une des revendications 11 à 23, caractérisé en ce que les informations textuelles et graphiques contiennent le nom du laboratoire de traitement, éventuellement un texte publicitaire et/ou un logo de société.

25. Procédé selon l'une des revendications 11 à 24, caractérisé en ce que les données variables contiennent un numéro d'identification de film et/ou la date du jour.

26. Procédé selon l'une des revendications 11 à 25, caractérisé en ce que les données variables contiennent un numéro de traitement interne au laboratoire (numéro de double contrôle) et/ou la date du jour.

27. Procédé selon une des revendications précédentes, caractérisé en ce que les numéros de vues (8) sur la bande de film (13) et analysés mémorisés à partir de celle-ci sont reportés sur le photo-index (2) à titre d'informations de vues individuelles.

28. Procédé selon l'une des revendications 1 à 26, caractérisé en ce que des données d'identification de vues produites individuellement ou fixes prédéfinies sont reportées sur le photo-index (2) à titre d'informations de vues individuelles.

29. Procédé selon la revendication 2, caractérisé en ce que les images (7) sont reproduites sur le photo-index (2) avec un léger agrandissement par rapport à l'original, ce qui permet d'utiliser le photo-index (2) comme tirage d'archive (tirage d'essai).

30. Dispositif pour produite des photo-index avec une tireuse photographique qui, dans une enceinte étanche à la lumière (10), contient une source lumineuse (31), un presse-film (11) pour recevoir et pour transporter une bande de film d'originaux (13), un presse-papier (14) pour positionner et pour transporter du papier photographique (15), un objectif de projection (33) pour reproduire sur le papier photographique (15) des originaux placés sur la bande de film d'originaux (13), et une station d'analyse (12) pour l'analyse, de préférence point par point, de la surface d'image des originaux et d'informations de vues éventuellement présentes sur la bande de film d'originaux (13), en particulier de numéros de vues (8) et de données complémentaires éventuelles, et qui comprend en plus un calculateur (53), lequel, à partir des valeurs d'analyse calculées par la station d'analyse (12), calcule des valeurs de commande d'insolation, mémorise dans une unité de mémoire (52) les valeurs d'analyse et/ou des valeurs déduites de celles-ci, et coordonne et commande les séquences de fonctionnement de la tireuse, caractérisé en ce que la tireuse est également munie d'un objectif à photo-index (41), lequel peut être placé sur le trajet de rayons de reproduction (47) au lieu de l'objectif de projection (33) et, sous la commande du calculateur (53), peut être déplacé au moins dans une dimension, de façon à reproduire sur le papier photographique (15) une pluralité d'originaux individuels de la bande de film d'originaux (13) sous forme de photo-index (2) dans un agencement en forme de matrice, et en ce que la tireuse est également munie de moyens de report (111, 112) qui reportent sur le papier photographique (15), en conformité spatiale avec les reproductions (7) des originaux individuels du photo-index (2), les informations de vues individuelles (8) éventuellement analysées à partir de la bande de film d'originaux (13) ou produites individuellement ou fixes prédéfinies.

31. Dispositif selon la revendication 29, caractérisé en ce que l'objectif à photo-index (41) peut être déplacé graduellement transversalement à la direction de transport du papier photographique (15).

32. Dispositif selon la revendication 30, caractérisé en ce que l'objectif à photo-index (41) peut être déplacé graduellement parallèlement à la direction de transport du papier photographique (15).

33. Dispositif selon l'une des revendications 29 à 31, caractérisé en ce que les moyens de report (111, 112) comprennent une unité d'affichage numérique luminescente ou éclairée (112) pilotée par le calculateur (53).

34. Dispositif selon l'une des revendications 29 à 32, caractérisé en ce que la tireuse comprend des moyens de projection de cadre (31, 33, 60 à 70) pour reporter une image de cadre (3) sur le papier photographique (15).

35. Dispositif selon la revendication 33, caractérisé en ce que les moyens de projection de cadre (31, 33, 60 à 70) comprennent une bande de film à photo-index (60) avec au moins un modèle d'image de cadre (61 à 63), et en ce qu'il est prévu des moyens de transport (66 à 70) qui sont pilotés par le calculateur (53) et qui engagent la bande de film à photo-index (60) sur le trajet de rayons de reproduction (47) de l'objectif de projection (33) et l'en dégagent à nouveau.

36. Dispositif selon l'une des revendications 29 à 34, caractérisé en ce que la tireuse comprend des moyens de protection contre la lumière diffusée (104 à 106), qui, durant le report des images individuelles (7) du photo-index (2), protègent les images déjà reportées contre la lumière diffusée.
